# EUROPÄISCHE PATENTSCHRIFT

(11) **EP 2 310 706 B1**
(45) Veröffentlichungstag und Bekanntmachung des Hinweises auf die Patenterteilung: **14.11.2012**
(21) Anmeldenummer: 09775919.5
(22) Anmeldetag: 29.06.2009
(51) Int. Cl.: F16D 13/70, F16D 25/08, F16D 25/10, F16D 21/06

(54) **DOPPELKUPPLUNG**
DUAL CLUTCH
EMBRAYAGE DOUBLE

(30) Priorität: 14.07.2008 DE 102008033033
(43) Veröffentlichungstag der Anmeldung: 20.04.2011
(73) Patentinhaber: Schaeffler Technologies AG & Co. KG, 91074 Herzogenaurach (DE)
(72) Erfinder: NÖHL, Oliver, 77830 Bühlertal (DE); AGNER, Ivo, 77815 Bühl (DE); RADINGER, Norbert, 90475 Nürnberg (DE)
(74) Vertreter: Hoferer, Andreas
(86) Internationale Anmeldenummer: PCT/DE2009/000900
(87) Internationale Veröffentlichungsnummer: WO 2010/006577

(56) Entgegenhaltungen:
- EP-A- 0 185 176
- EP-A- 0 692 665
- EP-A- 1 813 832
- DE-A1-102006 057 482
- FR-A- 2 797 004
- US-A1- 2003 079 953

## Beschreibung

Die Erfindung betrifft eine Doppelkupplung mit zwei von einer Antriebseinheit angetriebenen Reibungskupplungen mit einem gemeinsamen Kupplungsgehäuse und einer mit diesem fest verbundenen Anpressplatte mit zwei Anpressflächen sowie zwei jeweils einer Anpressfläche zugewandten, axial verlagerbaren Druckplatten.

Doppelkupplungen mit zwei Reibungskupplungen mit einem Kupplungsgehäuse und einer mit diesem fest verbundenen zentralen Anpressplatte sind Z.B. aus den FR 2797 004 oder US 2003/0079953 bekannt. Dabei werden die Druckplatten von Betätigungseinrichtungen axial verlagert, indem radial innen axial eine Tellerfeder oder Hebelelemente mit einem vorgegebenen Ausrückweg beaufschlagt werden. Dabei stützen sich diese je nach Ausgestaltung der zugeordneten Reibungskupplung als zwangsweise zugedrückte oder zugezogene, also zwangsweise geschlossene, oder aufgedrückte oder aufgezogene, also zwangsweise geöffnete Reibungskupplung mittels einarmiger oder zweiarmiger Hebel am Kupplungsgehäuse unter Ausbildung einer Übersetzung ab, so dass der Axialweg der Betätigungseinrichtung länger als der Weg der Druckplatte vom vollständig geöffneten Zustand der Reibungskupplung, in dem kein Moment übertragen wird, zum vollständig geschlossenen Zustand, bei dem das maximale Moment übertragen wird, ist. Dies führt zu Betätigungssystemen mit Betätigungseinrichtungen, die insbesondere wegen ihrer großen axialen Ausdehnung einen großen Bauraum erfordern.

Infolge des vergleichsweise hohen Gewichts von Doppelkupplungen sind diese neben ihrer Aufnahme an der Kurbelwelle häufig auf einer der beiden Getriebeeingangswellen, beispielsweise auf der als Hohlwelle um die erste Getriebeeingangswelle koaxial angeordneten zweiten Getriebeeingangswelle radial abgestützt. Entsprechende Stützlager sind dabei häufig zwischen der zentralen Anpressplatte und der Hohlwelle angeordnet. Hierbei kann die Hohlwelle zum einen zusätzlichen Belastungen wie radial wirksamen Gewichtskräften der Doppelkupplung, Unwuchten sowie axial wirksamen Kräften während der Betätigung der Doppelkupplung ausgesetzt sein, die eine entsprechend abgestimmte Auslegung der Hohlwelle erfordert.

Weiterhin können in die Doppelkupplungen vom Getriebe Schwingungsanregungen, beispielsweise bei Nulldurchgängen während Lastwechseln, eingeleitet werden, so dass in den Kupplungsscheiben entsprechende Dämpfungsmaßnahmen vorzusehen sind.

Aus dem Stand der Technik sind weiterhin Doppelkupplungen bekannt, die verdrehbar am Getriebegehäuse aufgenommen sind. Um die Betätigungskräfte der Betätigungseinrichtungen, die sich am Getriebegehäuse gegenüber der Doppelkupplung axial abstützen, abzufangen und die axialen Betätigungswege definiert zu gestalten, wird die Doppelkupplung mittels eines Festlagers am Getriebegehäuse aufgenommen. Eine derartige Ausgestaltung erfordert eine Teilmontage der Doppelkupplung an Getriebe- und Antriebsseite.

Es stellt sich daher die Aufgabe, eine Doppelkupplung vorzuschlagen, die gegenüber dem Stand der Technik in vorteilhafter Weise weitergebildet ist. Insbesondere soll ein Betätigungssystem mit verringertem Bauraum vorgeschlagen werden.

Die Aufgabe wird durch eine Doppelkupplung mit zwei von einer Antriebseinheit angetriebenen Reibungskupplungen mit einem gemeinsamen Kupplungsgehäuse und einer mit diesem fest verbundenen Anpressplatte mit zwei Anpressflächen sowie zwei jeweils einer Anpressfläche zugewandten, axial verlagerbaren Druckplatten gelöst, wobei zwischen jeweils einer Druckplatte und der Anpressplatte Reibbeläge mit jeweils einer Getriebeeingangswelle eines Getriebes drehfest verbundenen Kupplungsscheibe zur Bildung eines Reibeingriffs durch axiale Beaufschlagung der Druckplatten mittels eines Betätigungssystems mit jeweils einer Betätigungseinrichtung verspannbar sind, das Betätigungssystem gegenüber dem Kupplungsgehäuse axial fest aufgenommen ist. Die Betätigungseinrichtungen sind dabei in einem gemeinsamen Aktorgehäuse aufgenommen. Durch Integration des Betätigungssystems in die Doppelkupplung entsteht ein in sich geschlossener Kraftfluss zur Betätigung der beiden Reibungskupplungen, indem die zur Verpressung der Kupplungsscheiben zwischen Anpressplatte und Druckplatten von den Betätigungseinrichtungen in das Kupplungsgehäuse eingeleitet wird. Hierzu stützt sich das gemeinsame Aktorgehäuse axial fest, beispielsweise mittels eines Stützlagers an dem Kupplungsgehäuse ab. Auf diese Weise kann die Doppelkupplung als autonom funktionierende Baueinheit ausgeführt werden, die als Ganzes prüfbar und montierbar ist. Lediglich die Versorgung der Betätigungseinrichtungen, die beispielsweise druckbeaufschlagbare Nehmerzylinder oder mechanische Elemente, die von Elektromotoren beaufschlagt werden, sein können, wird von außen an das Betätigungssystem herangeführt. Das Betätigungsgehäuse beziehungsweise dessen Aktorgehäuse steht bei einer verdrehbaren Aufnahme am Kupplungsgehäuse fest, während die Reibungskupplungen mit dem Kupplungsgehäuse rotieren. Zum Ausgleich dieser Relativverdrehung beaufschlagen die Betätigungseinrichtungen die direkte Übertragungseinrichtung zur Beaufschlagung der Druckplatten unter Zwischenschaltung von Betätigungslagern. Die direkt zwischen den Betätigungseinrichtungen und den Druckplatten wirksamen Übertragungselemente, beispielsweise steife Kolbenbleche, beaufschlagen die Druckplatten ohne Hebelwirkung, indem ein von den Betätigungseinrichtungen vorgegebener Hub in Größe und Betrag direkt auf die Druckplatten übertragen wird.

Das Aktorgehäuse kann dabei mittels einer Spielpassung am Getriebegehäuse abgestützt und zentriert sein. Hierzu kann zwischen einer als Hohlwelle ausgestalteten Getriebeeingangswelle und dem Getriebegehäuse ein Ringspalt gebildet sein, in den ein axialer Ansatz des Aktorgehäuses axial eingreift und zentriert wird. Dabei kann die Doppelkupplung axial entgegen der Wirkung eines Energiespeichers begrenzt verlagerbar sein. Entsprechend einer vorteilhaften Ausgestaltung kann die Doppelkupplung antriebsseitig mittels einer Steckverzahnung drehfest und axial begrenzt verlagerbar aufgenommen sein, wobei eine axiale Verlagerung der Doppelkupplung getriebeseitig axial mittels eines Anschlags begrenzt ist und der Energiespeicher antriebsseitig angeordnet ist. Auf diese Weise ist die Doppelkupplung quasi schwimmend gelagert und kann von dem axial wirksamen Energiespeicher, beispielsweise einer Tellerfeder, gegen den getriebeseitigen Anschlag verspannt werden. Um große axiale Toleranzen ausgleichen zu können und die Federwirkung in der Einbausituation erhalten zu können kann ein axial plastisch verformbarer Energiespeicher, der während der Montage auf Einsatzabstand plastisch verformt wird, vorgesehen werden.

Zum Ausgleich von Achsversätzen der Rotationsachsen zwischen Antriebseinheit und Getriebe kann die Spielpassung zwischen dem Aktorgehäuse und dem Getriebe innerhalb eines vorgegebenen Winkels gelenkig verschwenkbar ausgestaltet werden. Hierzu kann an dem axialen Ansatz des Aktorgehäuses ein Ballus mit einem Radius vorgesehen werden, dessen Drehmittelpunkt auf der Rotationsachse der Getriebeeingangswellen liegt.

Das Eingangsteil der Doppelkupplung kann antriebsseitig mit der Kurbelwelle direkt oder unter Zwischenschaltung eines Drehschwingungsdämpfers, beispielsweise einem Zweimassenschwungrad mit einem Primär- und Sekundärteil verbunden sein. Dabei kann die Steckverbindung am Sekundärteil, also dem Ausgangsteil des Drehschwingungsdämpfers angeordnet sein, während das Primär- oder Eingangsteil des Zweimassenschwungrads beziehungsweise Drehschwingungsdämpfers mit der Antriebswelle der Antriebseinheit, beispielsweise einer Kurbelwelle einer Brennkraftmaschine verbunden ist. Weiterhin kann das Eingangsteil der Doppelkupplung auf einer Antriebswelle oder einem mit diesen drehfest verbundenen Bauteil der Antriebseinheit verdrehbar gelagert sein und mit dem Ausgangsteil des Drehschwingungsdämpfers mittels der Steckverzahnung drehschlüssig verbunden sein. Auf diese Weise kann eine Belastung der sich radial erstreckenden Teile und der dazwischen optional angeordneten Energiespeicher ausgeschlossen werden und dennoch eine Anbindung der Doppelkupplung an das Ausgangsteil sichergestellt werden. Hierzu kann die Lagerung der Doppelkupplung mittels eines Gleitlagers auf der Antriebswelle erfolgen, wobei der radial innere Gleitlagerring antriebsseitig, beispielsweise als Winkelring an der Antriebswelle unter Ausbildung eines axialen Ansatzes als Lagerfläche verbunden und der radial äußere Lagerring von einem Eingangsteil der Doppelkupplung gebildet wird.

In einem weiteren Ausführungsbeispiel kann die Doppelkupplung antriebsseitig axial fest, beispielsweise mit dem Ausgangsteil eines Drehschwingungsdämpfers wie Zweimassenschwungrad oder der Antriebswelle verbunden sein. In diesem Fall kann auf einen getriebeseitigen Anschlag der Spielpassung verzichtet werden. In vorteilhafter Weise kann zwischen der Doppelkupplung und der Antriebswelle zur Dämpfung von Axial- und/oder Taumelschwingungen der Antriebswelle sowie zum Ausgleich von Achsversätzen ein in axiale Richtung biegeweiches Bauteil, beispielsweise eine sogenannte Flexplate vorgesehen sein, die als Antriebsblech direkt mit der Doppelkupplung oder dem Eingangsteil des Drehschwingungsdämpfer verbunden sein kann.

Eine vorteilhaft ausgestaltete Doppelkupplung kann während der Montage auf die Getriebeeingangswellen aufgefädelt werden und bis zur Montage des Getriebes an die Antriebseinheit auf den Getriebeeingangswellen gelagert werden, bis der Formschluss zur Antriebswelle oder einem Drehschwingungsdämpfer hergestellt ist. Dabei kann vorteilhaft sein, wenn das Aktorgehäuse zumindest während der Montage zusätzlich auf einer Getriebeeingangswelle verdrehbar abgestützt ist. Ein entsprechendes Lager kann an einer der Getriebeeingangswellen, vorzugsweise an der Hohlwelle vorgesehen und als Nadel- oder Gleitlager ausgebildet sein, das zumindest begrenzt auf dieser axial verlagerbar ist. In bevorzugter Weise sind die Abstützung beziehungsweise das Nadel- oder Gleitlager und das das Aktorgehäuse aufnehmende Stützlager radial übereinander und axial in Linie angeordnet. Nach der Endmontage kann die Abstützung eine geringe Stützkraft der Doppelkupplung aufnehmen oder in vorteilhafter Weise nach der antriebsseitigen Aufnahme der Doppelkupplung zum Aktorgehäuse ein Lüftspiel ausbilden.

Als Antriebseinheit kann beispielseise eine Brennkraftmaschine mit einer Kurbelwelle und/oder eine Elektromaschine mit einer Antriebswelle dienen. In Kombination kann ein hybridischer Antrieb vorgesehen sein, bei dem alternativ oder einander ergänzend zumindest eine Brennkraftmaschine und zumindest eine Elektromaschine die Antriebseinheit bilden.

Die beiden Reibungskupplungen sind vorzugsweise trockene Einscheibenkupplungen mit jeweils einer metallischen Reibfläche an der Anpress- und an den Druckplatten sowie Reibbeläge tragende, Gegenreibflächen bildende Kupplungsscheiben. Die Reibbeläge der Kupplungsscheiben sind bevorzugt mit einer Belagfederung ausgestattet, weiterhin werden die Druckplatten axial verlagerbar entgegen der Wirkung von Energiespeichern wie beispielsweise Blattfedern geschlossen, so dass während des Öffnens einer Reibungskupplung die zugehörige Druckplatte in Öffnungsrichtung verlagert wird.

Zumindest eine der beiden Reibungskupplungen ist dabei selbstöffnend ausgestaltet. Dies bedeutet, dass bei einer Entlastung der Betätigungseinrichtung die Reibungskupplung vom geschlossenen in den geöffneten Zustand übergeht. In bevorzugter Weise werden beide Reibungskupplungen als zwangsweise geschlossene, also von der jeweiligen Betätigungseinrichtung zugedrückte oder zugezogene Reibungskupplung ausgestaltet, so dass beide Reibungskupplungen selbstöffnend sind, sobald eine Betätigungseinrichtung, beispielsweise infolge eines Defekts nicht mehr in Funktion ist. Hierzu kann ein zwischen dem Kupplungsgehäuse und der Druckplatte axial wirksamer Energiespeicher angeordnet sein, der die nicht unter Last stehende Betätigungseinrichtung axial in eine Ruheposition bei geöffneter Reibungskupplung verlagert. Dieser Energiespeicher kann aus über den Umfang verteilten, verstärkten Blattfedern gebildet sein oder ein zusätzlicher Energiespeicher sein.

Durch die Abstützung der Doppelkupplung am Getriebegehäuse wird eine Abstützung der Doppelkupplung auf einer der beiden Getriebeeingangswellen vermieden, so dass diese keine Biegebelastung durch die Doppelkupplung erfahren und diesbezüglich keiner separaten Auslegung bedürfen. Weiterhin werden dadurch weder Schwingungen, beispielsweise Taumelschwingungen, vom Getriebe in die Doppelkupplung noch von der Doppelkupplung auf diese Weise in das Getriebe übertragen. Das Getriebe kann ein Getriebe mit einem Haupt- und einem Nebenabtrieb sein. In bevorzugter Weise wird die Doppelkupplung jedoch für ein Doppelkupplungsgetriebe mit zwei Teilantriebssträngen zur Bildung eines Lastschaltgetriebes eingesetzt, bei dem jeweils ein Teilantriebsstrang bei einem eingelegten Gang Moment von der Antriebseinheit bei geschlossener Reibungskupplung auf die Räder eines Kraftfahrzeugs überträgt und in dem anderen Teilantriebsstrang bei geöffneter Reibungskupplung ein nachfolgender Gang eingelegt beziehungsweise nach dem Einlegen im eingelegten Zustand bereitgehalten wird. Eine Schaltung erfolgt durch Überschneidung der beiden Reibungskupplungen der Doppelkupplung, wobei die geschlossene Reibungskupplung schlupfend geöffnet und die geöffnete Reibungskupplung schlupfend geschlossen wird, so dass während der Überschneidung über beide Teilantriebsstränge wechselnde Teilmomente übertragen werden.

Es hat sich als vorteilhaft gezeigt, wenn beide Reibungskupplungen zwangsweise geschlossene Reibungskupplungen sind, um ein Verblocken des Doppelkupplungsgetriebes bei Ausfall einer Betätigungseinrichtung insbesondere während einer Überschneidungsschaltung zu vermeiden. Aufgrund der vorteilhaften Anordnung einer zentralen Anpressplatte mit gegenüberliegenden Druckplatten der Reibungskupplung werden die Betätigungswege zum Schließen der Reibungskupplungen in ihrer Funktion zueinander entgegengesetzt angeordnet. Dabei werden beide Reibungskupplungen in vorteilhafter Weise von der Getriebeseite her betätigt. Hierzu wird eine Reibungskupplung zugedrückt und die der Antriebsseite zugewandte Reibungskupplung mittels Zugankern, die das Kupplungsgetriebe durchgreifen zugezogen. Ein alternatives Ausführungsbeispiel sieht eine Doppelkupplung vor, deren antriebsseitig angeordnete Druckplatte mittels eines außerhalb des Kupplungsgehäuses die Anpressplatte übergreifenden Übertragungselements betätigt wird. Dabei kann das Übertragungselement direkt den Ringkolben bilden und das Kupplungsgehäuse radial und axial außen umgreifen und direkt mit der Druckplatte verbunden sein. Das Kupplungsgehäuse ist dabei radial innerhalb oder radial im Wesentlichen auf gleicher Höhe wie die Verbindungspunkte des Übertragungselements mit der Druckplatte über den Umfang abwechselnd mit der Anpressplatte verbunden. Hierzu weisen das Kupplungsgehäuse und/oder das Übertragungselement entsprechende Ausschnitte im Bereich der Befestigung an Druckplatte beziehungsweise Kupplungsgehäuse auf.

Die Betätigungseinrichtungen können mechanische Hebelvorrichtungen sein, die von radial außen beispielsweise elektromotorisch betrieben werden. Besonders vorteilhaft ist eine pneumatische oder bevorzugt hydraulische Betätigung der Doppelkupplung, wobei das Aktorgehäuse als Nehmerzylindergehäuse ausgebildet ist, in dem zur Beaufschlagung jeweils eines Übertragungselements jeweils ein von außen druckbeaufschlagter Nehmerzylinder untergebracht ist. Die Nehmerzylinder weisen hierzu jeweils einen Ringkolben oder über den Umfang verteilte Einzelkolben auf, die axial in einer von außen druckbeaufschlagbaren Druckkammer verlagerbar sind und unter Zwischenschaltung eines Betätigungslagers die Übertragungselemente betätigen.

Die Druckkammern der Nehmerzylinder werden beispielsweise von jeweils einem Geberzylinder, der mittels eines Elektromotors von einem Steuergerät gesteuert wird, oder von einer Pumpe, gegebenenfalls unter Mitwirkung eines Druckspeichers, beaufschlagt, wobei die Pumpe von der Antriebseinheit oder von einem Elektromotor betrieben werden kann. In vorteilhafter Weise kann ein sogenanntes Powerpack eingesetzt werden, das über eine zentrale Pumpe und entsprechenden Ventilen mehrere Druckkreisläufe schaltet, wobei beide Reibungskupplungen betätigt werden und die Beschaltung des Getriebes und die Umlaufschmierung des unten beschriebenen Ringraums erfolgen können.

Es kann vorteilhaft sein, wenn zwischen den Betätigungseinrichtungen und den Übertragungselementen vorgesehene Betätigungslager aus Nadellagern gebildet sind. Durch den axial geringeren axial erforderlichen Bauraum kann der axiale Bauraum des gesamten Betätigungssystems verringert werden. Die Betätigungslager werden vorzugsweise als Kugellager wie Rillenkugellager ausgeführt, wenn eine Radialbelastung zwischen den Laufringen auftritt.

Zur Schonung der Ringkolbendichtungen gegen Verschleiß können die Ringkolben in der Druckkammer beziehungsweise den diese bildenden Gehäuseteile des Aktorgehäuses verdrehgesichert untergebracht sein. Beispielsweise können an den gehäuseseitigen Anschlagflächen der Kolben Axialprofile wie Stifte vorgesehen sein, die in entsprechende Öffnungen an der Stirnfläche der Druckkammern axial eingreifen.

Gemäß einer vorteilhaften Weiterbildung kann ein nach außen abgedichteter Ringraum vorgesehen sein, der die Betätigungslager und ein das Aktorgehäuse am Kupplungsgehäuse aufnehmendes Stützlager aufnimmt. Das im Ringraum zur Schmierung und Kühlung eingesetzte Fluid kann in einem äußeren Kühlkreislauf umgewälzt werden. Ein vorteilhaftes Ausführungsbeispiel sind hierzu vor, das Fluid im Ringraum radial außen abzuschöpfen, über das Aktorgehäuse einem äußeren Kühlkreislauf und nach einer Aufnahme durch das Aktorgehäuse wieder dem Ringraum zuzuführen. Der Kühlkreislauf kann durch das Getriebegehäuse und gegebenenfalls einem separaten Kühler zugeführt werden. Weiterhin kann eine Pumpe zur Zwangsumwälzung vorgesehen werden.

Je nach Ausführung und Bauraumverhältnissen kann es vorteilhaft sein, die Ringkolben auf demselben Durchmesser anzuordnen. In vorteilhafter Weise kann die Anzahl verschiedener Bauteile vermindert werden, da beispielsweise Ringkolben, Betätigungslager, Ringkolbendichtungen und dergleichen Gleichteile sind. In anderen Ausführungsbeispielen kann der axiale Bauraum vermindert werden, indem die Ringkolben radial übereinander angeordnet werden.

Die Versorgung der Nehmerzylinder mit Druckmittel zur Beaufschlagung der Übertragungselemente und Betätigung der Reibungskupplungen erfolgt über Bohrungen in dem Aktorgehäuse. Weiterhin können entsprechende Bohrungen auch als Zu- und Ableitungen für den Kühlkreislauf des Ringraums vorgesehen sein. Die Zuführöffnungen kommunizieren dabei mit Zuführöffnungen der Druckversorgungseinheit für die Nehmerzylinder. Dabei kann eine Druckbeaufschlagung der Nehmerzylinder rein hydrostatisch mittels eines Geberzylinders erfolgen, so dass für jeden Nehmerzylinder lediglich eine Zuleitung und gegebenenfalls eine Entlüftungsleitung notwendig sind. Bei einer Steuerung der Nehmerzylinder mittels eines Volumenstroms ist zusätzlich eine Ableitung in den Sumpf, beispielsweise dem Getriebeölsumpf notwendig.

Als besonders vorteilhaft hat sich die Verwendung eines Zuführteils erwiesen, welches eine Übergabe von Druckmittel zur Betätigung der Nehmerzylinder von radial außen ermöglicht. Ein derartiges Zuführungsteil kann am Getriebegehäuse befestigt sein und axial ausgerichtete Druckanschlüsse aufweisen, die mit korrespondierenden Druckanschlüssen des Aktorgehäuses verbindbar sind. Die Verbindung der Druckanschlüsse kann mittels zu den Druckanschlüssen abgedichteten Rohrabschnitten erfolgen. Dabei können die Druckanschlüsse auf demselben Durchmesser wie ein axialer Ansatz des Aktorgehäuses zur Abstützung der Doppelkupplung am Getriebegehäuse angeordnet sein. Auf diese Weise kann die Zuführung des Druckmittels bei kleinen Durchmessern erfolgen, so dass auch die Durchmesser der Ringkolben der Nehmerzylinder auf kleinem Durchmesser unter Verwendung kostengünstigerer Bauteile angeordnet werden können.

Zum Ausgleich von toleranzbedingten Winkelversätzen zwischen Antriebseinheit und Getriebe beziehungsweise der Rotationsachsen von Antriebswelle und Getriebeeingangswellen können die Rohrabschnitte ein Aufnahmespiel in den Druckanschlüssen aufweisen. Weiterhin können die Rohrabschnitte eine Drehmomentabstützung des Aktorgehäuses gegenüber dem Getriebegehäuse übernehmen. Das Aktorgehäuse kann mit dem Zuführteil axial verschachtelt ausgebildet sein, beispielsweise kann zumindest ein axialer Vorsprung des Aktorgehäuses zur Abstützung am Getriebegehäuse einen Vorsprung mit den Druckanschlüssen des Zuführungsteils axial übergreifen. Auf diese Weise bilden die Vorsprünge in Umfangsrichtung zueinander Anlageflächen, so dass eine Drehmomentabstützung zwischen Aktorgehäuse und Getriebe auch durch Abstützung dieser Anlageflächen in Umfangsrichtung erfolgen kann. Weiterhin können zur Erzielung einer Kompensation des Winkelversatzes auch die Ringkolben in der zugehörigen Druckkammer mit Spiel aufgenommen sein.

Um hierbei Undichtigkeiten der Nehmerzylinder, die sich bei Benetzung der Reibflächen der Reibungskupplungen schädlich auswirken könnten, vorzubeugen, kann zumindest ein Ringkolben einen zu einer Ringkolbendichtung axial beabstandeten Abstreifring aufweisen. Im Falle einer Undichtigkeit kann dieser Abstreifring das Austreten von Druckmittel verhindern. Dabei kann zwischen Ringkolbendichtung und Abstreifring eine Drainageöffnung vorgesehen sein, über die überschüssiges Druckmittel in einen Getriebesumpf oder ein auf Lebensdauer abgestimmtes Gefäß abgeführt werden.

Eine weitere vorteilhafte Ausgestaltung einer Doppelkupplung sieht eine drehfeste Aufnahme des Aktorgehäuses am Kupplungsgehäuse vor, wobei die Betätigungseinrichtungen als in einem Aktorgehäuse angeordnete Nehmerzylinder ausgestaltet sind und ein zur Betätigung von in Druckkammern des Aktorgehäuses aufgenommenen Ringkolben eingesetztes Druckmittel mittels Drehdurchführungen von einem Getriebegehäuse des Getriebes in das Aktorgehäuse eingebracht wird. Auf diese Weise dreht die gesamte Doppelkupplung unter drehfester Aufnahme aller Bauteile einschließlich des Betätigungssystems mit den Betätigungseinrichtungen als Baueinheit. Es können daher das Stützlager zwischen dem Kupplungsgehäuse und dem Aktorgehäuse und die Betätigungslager zwischen den Übertragungselementen und den Ringkolben weggelassen werden, wodurch Bauteilkosten gespart sowie axialer Bauraum und Gewicht eingespart wird. Das rotierende Aktorgehäuse wird mittels einer Drehdurchführung mit dem zur Betätigung der Nehmerzylinder notwendigen Druckmittel versorgt. Dabei kann das Aktorgehäuse zur Darstellung der Bohrungen und aus Montagegründen zweiteilig ausgebildet sein.

Um die unter Fliehkrafteinwirkung infolge der Beschleunigung des Druckmittels in den Druckkammern erhöhten Betätigungskräfte zu kompensieren, kann den Druckkammern eine mit Druckmittel befüllte, parallel angeordnete Fliehkraftkammer zugeordnet sein.

Infolge des Wegfalls der Betätigungslager können Ringkolben und Übertragungselemente fest miteinander verbunden und in besonders vorteilhafter Weise einteilig sein. Die Übertragungselemente können im Bereich der Ringkolben angespritzte Dichtungen zur Abdichtung gegenüber den Druckkammern aufweisen. Eine derart ausgestaltete Doppelkupplung kann auch anstatt einer gehäusefesten Aufnahme mittels eines Festlagers auf einer der Getriebeeingangswellen des Getriebes und mittels eines Loslagers auf der anderen, als Hohlwelle ausgebildeten Getriebeeingangswelle gelagert sein.

Weiterhin kann eine Doppelkupplung nach dem erfinderischen Gedanken ein Kupplungsgehäuse aufweisen, das aus einem antriebsseitigen und einem getriebeseitigen Gehäuseteil gebildet ist, wobei beide Gehäuseteile mit der Anpressplatte fest verbunden sind, das antriebsseitige axial fest an der Antriebsseite und das getriebeseitige, die Antriebsplatte und die Druckplatten enthaltende Gehäuseteil getriebeseitig vormontiert werden und die Gehäuseteile bei der Montage von Antriebseinheit und Getriebe miteinander verbunden werden.

Von dem nicht erfinderischen Gedanken ist weiterhin eine Reibungskupplung mit einem von einer Antriebseinheit angetriebenen Kupplungsgehäuse und einer mit diesem fest verbundenen Anpressplatte mit einer Reibfläche sowie einer der Reibfläche zugewandten, axial verlagerbaren Druckplatte umfasst, wobei zwischen der Druckplatte und der Anpressplatte Reibbeläge einer mit einer Getriebeeingangswelle eines Getriebes drehfest verbundenen Kupplungs- ' scheibe zur Bildung eines Reibeingriffs durch axiale Beaufschlagung der Druckplatte mittels einer Betätigungseinrichtung verspannbar sind, wobei die Betätigungseinrichtung mittels eines Aktorgehäuses gegenüber dem Kupplungsgehäuse axial fest aufgenommen ist. Weiterhin sind die auf eine Reibungskupplung anwendbaren oben beschriebenen vorteilhaften Ausgestaltungen der Doppelkupplungen ebenfalls für eine Einfachkupplung vorgesehen.

Die Erfindung wird anhand der Figuren 1 bis 16 näher erläutert.

Dabei zeigen:
- Figur 1: einen Teilschnitt durch ein Ausführungsbeispiel einer Doppelkupplung mit verdrehbar aufgenommenem Betätigungssystem,
- Figur 2: das Betätigungssystem der Figur 1 im Detail,
- Figur 3: eine weitere, der in Figur 1 gezeigten Doppelkupplung ähnlichen Doppelkupplung,
- Figur 4: das Betätigungssystem der Figur 3 im Detail,
- Figuren 5 und 6: eine Anbindung der Druckplatten an die Anpressplatte
- Figur 7: ein Ausführungsbeispiel zur Fluidversorgung des Ringraums,
- Figur 8: einen schematisch dargestellten Schmiermittelkreislauf,
- Figur 9: ein Detail aus einem Schmiermittelkreislauf,
- Figur 10: ein Ausführungsbeispiel zur Versorgung des Betätigungssystems im Schnitt,
- Figur 11: ein Detail der Figur 10,
- Figur 12: das Ausführungsbeispiel der Figur 10 in Explosionsdarstellung,
- Figur 13: ein Ausführungsbeispiel des Aktorgehäuses im Schnitt,
- Figur 14: eine weitere, der in Figur 1 gezeigten Doppelkupplung ähnlichen Doppelkupplung,
- Figur 15: einen Teilschnitt eines Ausführungsbeispiels einer Doppelkupplung mit drehfest mit dem Kupplungsgehäuse verbundenem Aktorgehäuse,
- Figur 16: eine weitere, der in Figur 15 gezeigten Doppelkupplung ähnlichen Doppelkupplung

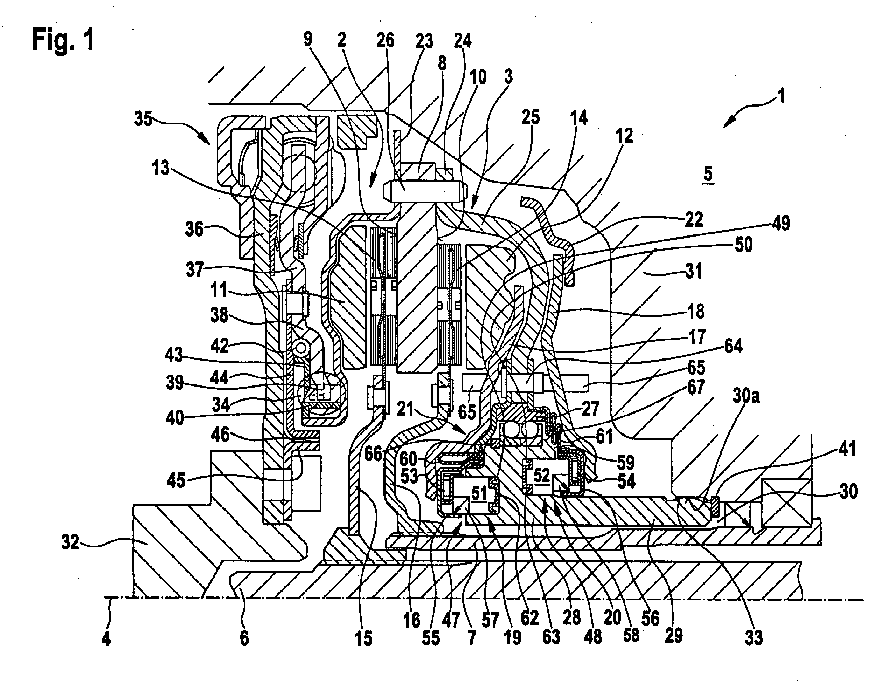

Figur 1 zeigt den oberen Teil einer um eine Rotationsachse 4 der Getriebeeingangswellen 6, 7 eines Getriebes 5 angeordneten Doppelkupplung 1 mit den Reibungskupplungen 2, 3. Die Reibungskupplungen 2, 3 sind durch eine zentrale Anpressplatte 8 und gegenüber jeweils einer Reibfläche 9, 10 verlagerbaren Druckplatten 11, 12 gebildet, wobei zwischen den Reibflächen 9, 10 und den diesen zugewandten Reibflächen der Druckplatten 11, 12 Reibbeläge 13, 14 von Kupplungsscheiben 15, 16 angeordnet sind, die jeweils mit einer Getriebeeingangswelle 6, 7 drehfest verbunden, beispielsweise verzahnt sind. Die Druckplatten 11, 12 werden in dem gezeigten Ausführungsbeispiel von Übertragungselementen 17, 18 beaufschlagt, die radial innen von Betätigungseinrichtungen 19, 20 des Betätigungssystems 21 direkt und ohne Hebelwirkung der Übertragungselemente 17, 18 axial verlagert werden, so dass auf die Druckplatten 11, 12 die von den Betätigungseinrichtungen 19, 20 aufgewendete Kraft über die Übertragungselemente 17, 18 im Wesentlichen ausgeübt wird. Die Druckplatte 11 der Reibungskupplung 2 wird dabei mittels der Zuganker 22 zugezogen, während die Reibungskupplung 3 mittels des Übertragungselements 17 zugedrückt wird. Die Übertragungselemente 17, 18 sind am Kupplungsgehäuse 25 zentriert. Hierzu sind in dem gezeigten Ausführungsbeispiel die Nieten 64 zur Aufnahme des Stützlagers 27 zu Zentrierbolzen 65 erweitert, die die Übertragungselemente durchgreifen und zentrieren. In weiteren Ausführungsbeispielen können die Übertragungselemente auch an den Druckplatten oder an den Zugankern 22 zentriert sein.

Die Anpressplatte 8 ist mit dem aus den beiden Gehäuseteilen 23, 24 gebildeten Kupplungsgehäuse 25 fest verbunden, beispielsweise mittels der Nieten 26 vernietet. Am Kupplungsgehäuse 25 ist mittels des Stützlagers 27 das Aktorgehäuse 28 des Betätigungssystems 21 verdrehbar und axial fest aufgenommen. Das Betätigungssystem 21 weist als Betätigungseinrichtungen 19, 20 Nehmerzylinder 47, 48 auf, so dass das Aktorgehäuse 28 als Nehmerzylindergehäuse ausgebildet ist. Die mittels von außen über Druckanschlüsse mit Druckmittel beaufschlagten Nehmerzylinder 47, 48 weisen in Druckkammern 49, 50 axial verlagerbare Ringkolben 51, 52 auf, die unter Zwischenschaltung der hier als Nadellager mit geringerem axialen Bauraum ausgebildeten Betätigungslager 53, 54 die Übertragungselemente 17, 18 beaufschlagen. Die Außenringe 55, 56 der Betätigungslager 53, 54 umgreifen die Ringkolben 51, 52 an deren Innenumfang axial und dichten an auf den Ringkolben 51, 52 angeordneten Radialwellendichtringen 57, 58 zur Bildung eines Ringraums 59 ab, der im Weiteren mittels elastischer Membranen 60, 61 wie Faltenbälgen, Rollmembranen oder Pendelmembranen unter Einbindung des Stützlagers 27 eine nach außen dichte Kammer zur Schmierung und Kühlung der Betätigungslager 53, 54 und des Stützlagers 27 bildet. Das hierzu in den Ringraum 59 eingebrachte Fluid kann in einem nach außen über das Aktorgehäuse führenden Kühlkreislauf umgewälzt werden. Um einen Verschleiß an den Dichtungen 62, 63 wie Nutringdichtung bei infolge der Lagerreibung der Betätigungslager 53, 54 verdrehten Ringkolben 51, 52 können diese eine Verdrehsicherung gegenüber dem Aktorgehäuse aufweisen. Beispielsweise können die Ringkolben 51, 52 zwischen den radial inneren und radial äußeren Dichtflächen der Dichtungen 62, 63 einen oder mehrere axial auskragende Profile wie Stifte aufweisen, die in entsprechend aus dem Boden der Druckkammern 49, 50 eingebrachte Gegenprofile wie Sacklochbohrungen eingreifen. Die Nehmerzylinder 47, 48 sind bezüglich ihrer Wirkung entgegengesetzt zueinander angeordnet, so das sie in vorteilhafter Weise und Kraftumkehr auf die entgegengesetzt zueinander bewegten Druckplatten 11, 12 einwirken können. Zur direkten Einleitung der Betätigungskräfte sind die Übertragungselemente 17, 18 steif, beispielsweise als Kolbenbelche ausgestaltet.

Das Aktorgehäuse 28 ist mit dem Kupplungsgehäuse 25 spielfrei verbunden, um die in beide Richtungen auftretenden Betätigungskräfte insbesondere während einer Überschneidungsschaltung der beiden Reibungskupplung 2, 3 mit einem Nulldurchgang abzufangen. Das Stützlager 27 ist hierzu in dem gezeigten Ausführungsbeispiel als zweireihiges Schrägkugellager ausgestaltet und mittels eines Sprengrings 66 wie Keilsprengring gegen den Anschlag 67 am Aktorgehäuse 28 verspannt. Das Aktorgehäuse 28 ist mit einem axialen Ansatz 29 versehen, der an der Aufnahmefläche 30a einer zentralen Öffnung 30 des Getriebegehäuses 31 zentriert ist. Der axiale Ansatz 29 ist zum Ausgleich einer nicht koaxialen Anordnung der Rotationsachse 4 des Getriebes 5 und der nicht dargestellten Rotationsachse der Antriebswelle 32 der nicht dargestellten Antriebseinheit mit einem Ballus 33 versehen, der einen Radius aufweist, dessen Mittelpunkt auf der Rotationsachse 4 liegt, so dass das Aktorgehäuse 28 und damit die gesamte Doppelkupplung um einen geringen Winkelbetrag aus der Rotationsachse 4 verschwenkbar ist. Dieser Verschwenkwinkel wird antriebsseitig durch ein Verdrehflankenspiel der nachfolgend beschriebenen Steckverbindung 34 ermöglicht.

Die Doppelkupplung 1 wird mittels der Steckverbindung 34 drehfest und axial begrenzt verlagerbar auf der Antriebsseite aufgenommen. Diese wird in dem gezeigten Ausführungsbeispiel von der Antriebswelle 32, die eine Kurbelwelle einer Brennkraftmaschine sein kann, gebildet, an der ein Drehschwingungsdämpfer 35 wie Zweimassenschwungrad mittels eines Eingangsteils 36 aufgenommen ist. Das Ausgangsteil 37 bildet mit einem Flanschteil 38 zur Bildung der Steckverbindung 34 eine Innenverzahnung 39, die in Umfangsrichtung spielbehaftet mit einer am Innenumfang des Gehäuseteils 23 angebrachten Außenverzahnung 40 kämmt. Infolge der axial erweiterten Außenverzahnung 40 ist eine begrenzte axiale Verlagerung der Doppelkupplung möglich, die durch den am Getriebegehäuse 31 vorgesehenen Anschlag 41, beispielsweise in Form eines Spreng- oder Sicherungsrings, für den axialen Ansatz 29 des Aktorgehäuses 28 begrenzt wird. Die Doppelkupplung ist infolgedessen axial schwimmend gelagert. Das Verdrehspiel der Steckverbindung 34 wird entgegen der Wirkung eines Energiespeichers 42, der auf ein Spannblech 43 vorgespannt sein kann, vorgespannt. Mit dem Flanschteil 38 ist ein Lagerblech 44 verbunden, das mit einem an der Antriebswelle 32 angeordneten Lagerblech 45 eine Lagerung 46, beispielsweise eine Gleitlagerung für das Ausgangsteil 37 und damit über die am Ausgangsteil 37 mittels der Steckverbindung 34 aufgenommene Doppelkupplung 1 bildet. Die Doppelkupplung ist damit abgesehen von den Kupplungsscheiben 15, 16 von den Getriebeeingangswellen 6, 7 entkoppelt.

Die Doppelkupplung 1 wird als komplette Baueinheit geliefert, die das Betätigungssystem umfasst. Der Anschluss der beiden Nehmerzylinder erfolgt mittels nicht dargestellter Schnellkupplungen. Durch die Steckverbindung 34 kann eine Montage ohne Werkzeuge erfolgen. Hierzu wird die Doppelkupplung 1 auf die Getriebeeingangswellen 6, 7 geschoben, anschließend werden die Druckanschlüsse mit den Druckleitungen der Druckgeber verbunden. Bei der Verbindung von Antriebseinheit und Getriebe 5 wird die Steckverbindung 34 gebildet.

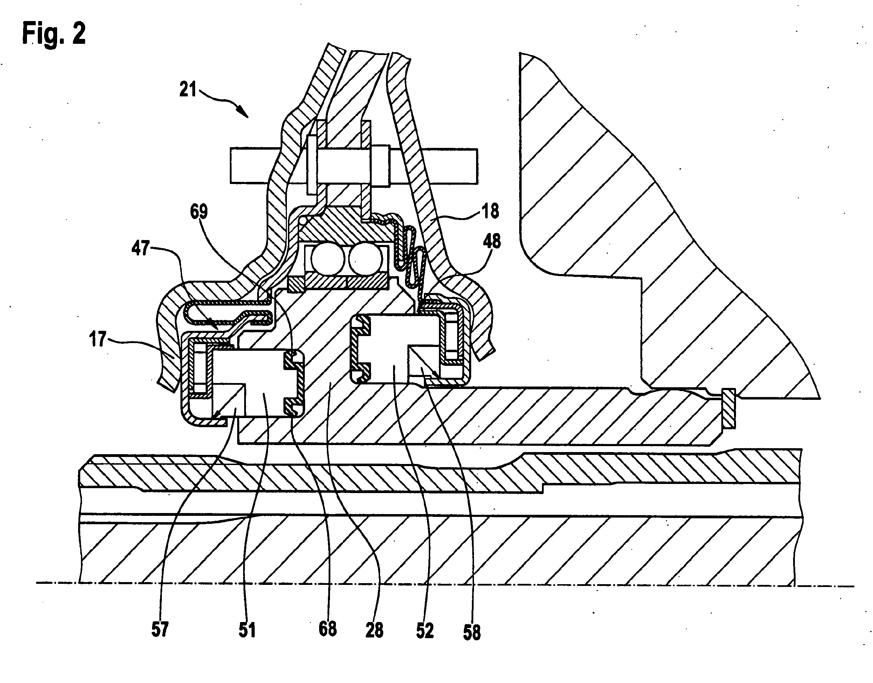

Figur 2 zeigt die Betätigungseinrichtung 21 der Figur 1 im Detail. Die Ringkolben 51, 52 verlagern die Übertragungselemente jeweils radial außen, da im Innenumfang die Radialwellendichtringe 57, 58 angeordnet sind. Die dadurch und durch andere Effekte hervorgerufene mögliche einseitige Belastung der Ringkolben 51, 52 kann zu einer leichten Schiefstellung der Ringkolben gegenüber dem Aktorgehäuse 28 führen. Zur Gewährleistung der Dichtigkeit der Nehmerzylinder 47, 48 können die Dichtlippen 68, 69 so ausgestaltet sein, dass sie ein entsprechendes Spiel der Ringkolben 51, 52 ausgleichen.

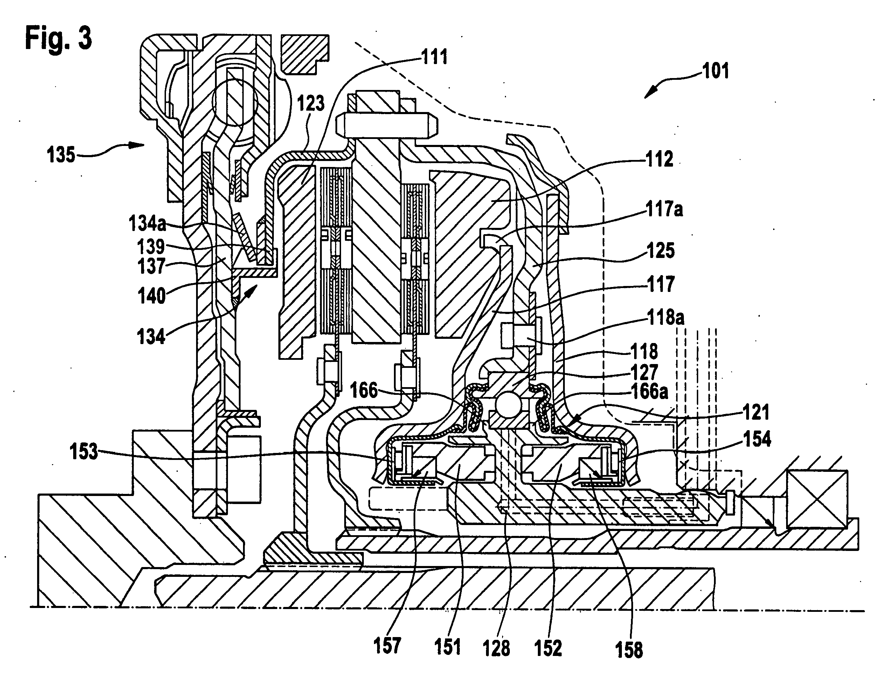

Figur 3 zeigt die der Doppelkupplung 1 der Figur 1 ähnliche Doppelkupplung 101. Neben einer veränderten Ausbildung der mittels des Energiespeichers 134a axial verspannten Steckverbindung 134 auf radialer Höhe der Druckplatte 111, wobei die Außenverzahnung 140 am Ausgangsteil 137 des Drehschwingungsdämpfers 135 und die Innenverzahnung 139 am Gehäuseteil 123 angeordnet ist, ist das Übertragungselement 117 mittels einer Zentriernase 117a an der Druckplatte 112 zentriert. Die Zentrierung des Übertragungselements 118 erfolgt mittels Blattfeder 118a am Kupplungsgehäuse 125. Die Ringkolben 151, 152 des Betätigungssystems 121 sind auf gleichem Durchmesser angeordnet, so dass identische Teile für die Ringkolben 151, 152 und dessen Dichtungen, Betätigungslager 153, 154 und Radialwellendichtringe 157, 158 verwendet werden können. Im Weiteren ist das Stützlager 127 auf dem Aktorgehäuse 128 am Anschlag 166 aufgenommen und mittels einer Materialumformung 166a fixiert.

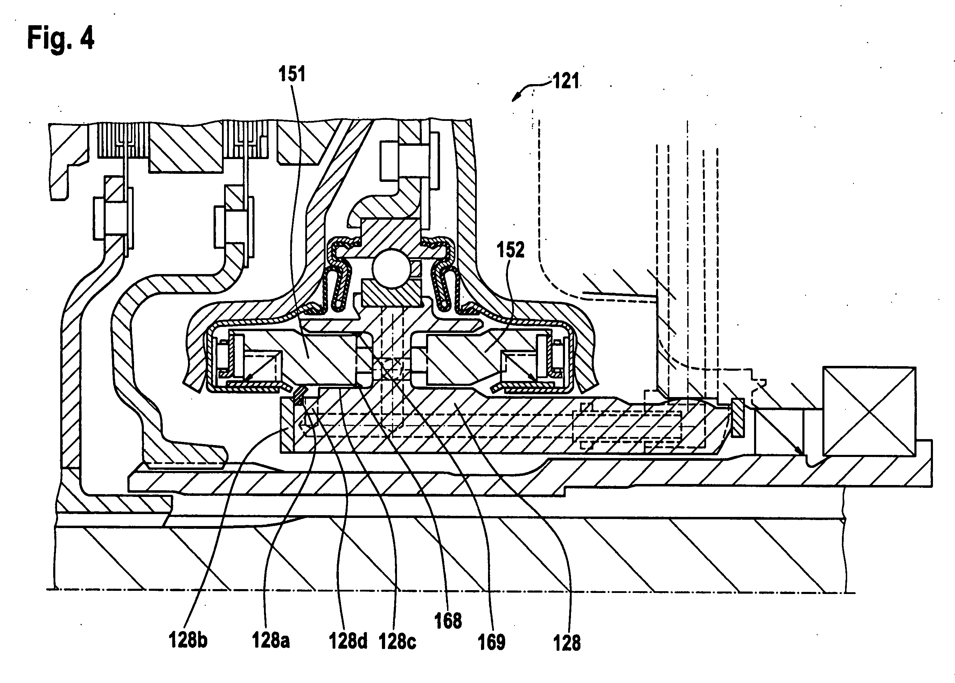

Figur 4 zeigt im Wesentlichen das Betätigungssystem 121 im Detail. Die Ringkolben 151, 152 werden mit angespritzten beziehungsweise anvulkanisierten Dichtlippen 168, 169 versehen Um im Falle von Undichtigkeiten der Dichtlippen 168, 169 eine Beschädigung der Doppelkupplung insbesondere einer reibwertmindernden Verschmutzung der Reibbeläge und Reibflächen der Kupplungsscheiben und der Anpress- und Druckplatten zu vermeiden, können hierzu Maßnahmen getroffen werden. Wie in dem Ausführungsbeispiel abweichend zur Figur 3 am Beispiel für den Ringkolben 151 gezeigt, kann axial beabstandet zu der Dichtlippe 168 am Aktorgehäuse 128 ein auf dem Aktorgehäuse 128 und mittels einer Anschlagscheibe 128b fixierten Abstreifrings 128a vorgesehen werden, der gegebenenfalls austretendes Druckmittel vom Ringkolben 151 abstreift. Zur Ableitung des ausgetretenen Druckmittels kann außerhalb der Dichtfläche 128c der Dichtlippe 168 eine Öffnung 128d vorgesehen sein, die das Druckmittel im Aktorgehäuse nach außen in einen Getriebesumpf oder in ein sonstiges Gefäß ableitet. Es versteht sich, dass in ähnlicher Weise auch an den übrigen Kolbenflächen der Ringkolben 151, 152 entsprechende Abstreifringe vorgesehen werden können.

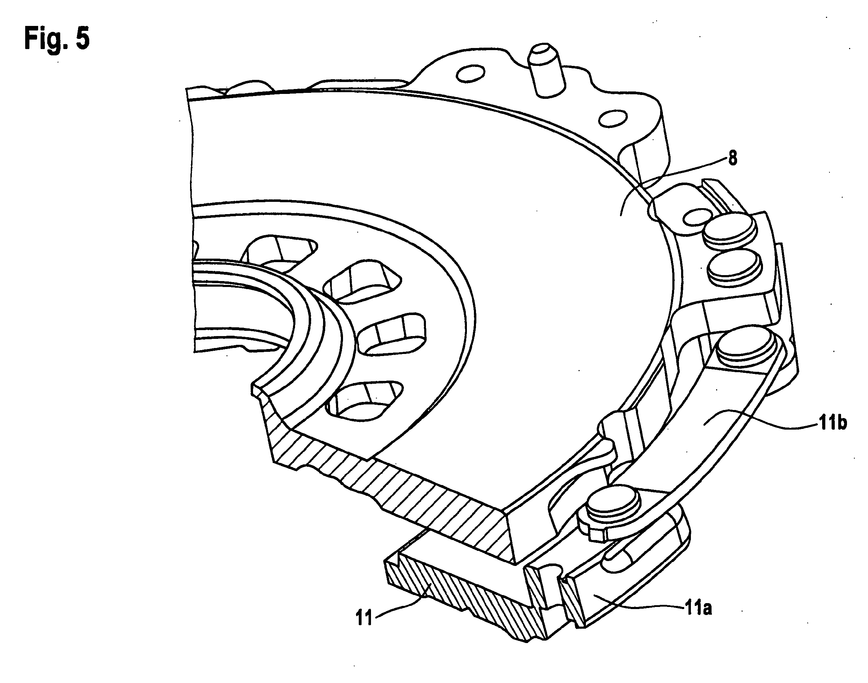

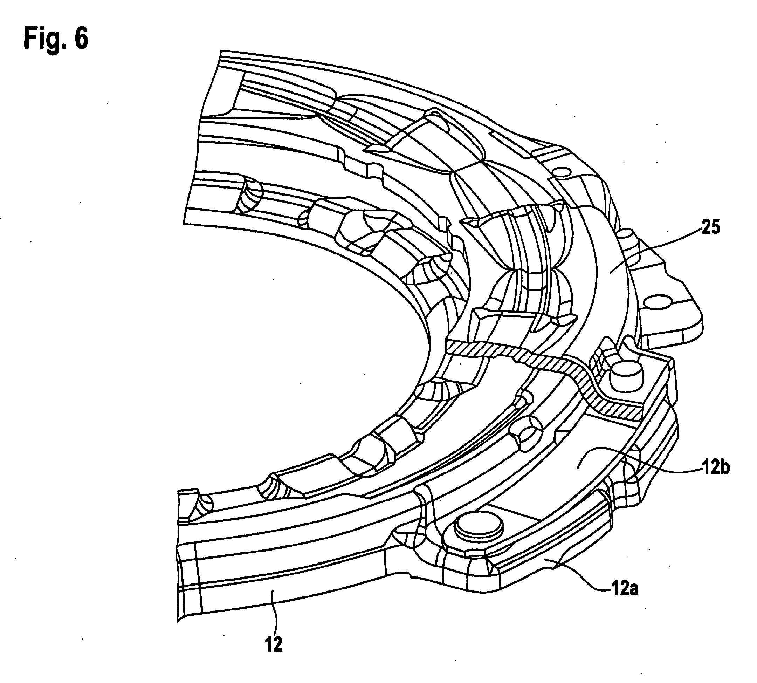

Die Figuren 5 und 6 zeigen ausschnittsweise die Befestigung der Druckplatten 11, 12 an der Anpressplatte 8 beziehungsweise am Kupplungsgehäuse 25. Die Druckplatten 11, 12 weisen hierzu radiale Erweiterungen 11a, 12a auf, an denen Blattfedern 11b, 12b endseitig befestigt sind. An ihrem anderen Ende sind die Blattfedern 11 b, 12b mit der Anpressplatte 8 beziehungsweise mit dem Kupplungsgehäuse 25 verbunden. Demzufolge sind die Blattfedern 11b so vorgespannt, dass Anpressplatte 8 und Druckplatte 11 in nicht belastetern Zustand der Druckplatte 11 maximal zueinander zur Einstellung eines Lüftspiels zu den Reibbelägen beabstandet. Hingegen werden die Blattfedern 12b so vorgespannt, dass sich die Druckplatte 12 an das Kupplungsgehäuse 25 maximal annähert, um ebenfalls ein Lüftspiel zu den Reibbelägen sicherzustellen. Die zugehörigen Reibungskupplungen sind daher als zwangsweise zugedrückte (normally open) Reibungskupplungen ausgeführt, so dass bei entlasteten Betätigungseinrichtungen die Reibungskupplungen selbstständig öffnen. Hierzu sind die Blattfedern 11b, 12b entsprechend verstärkt ausgebildet, so dass zwischen den Druckplatten 11, 12 und den Betätigungseinrichtungen sowie in den Betätigungseinrichtungen auftretende Reibungsverluste ausgeglichen werden. Beispielsweise muss die Dichtungsreibung der Nehmerzylinder 47, 48 der Figur 1 überwunden werden. Zusätzliche, die Blattfedern 11b, 12b unterstützende Energiespeicher können vorgesehen sein.

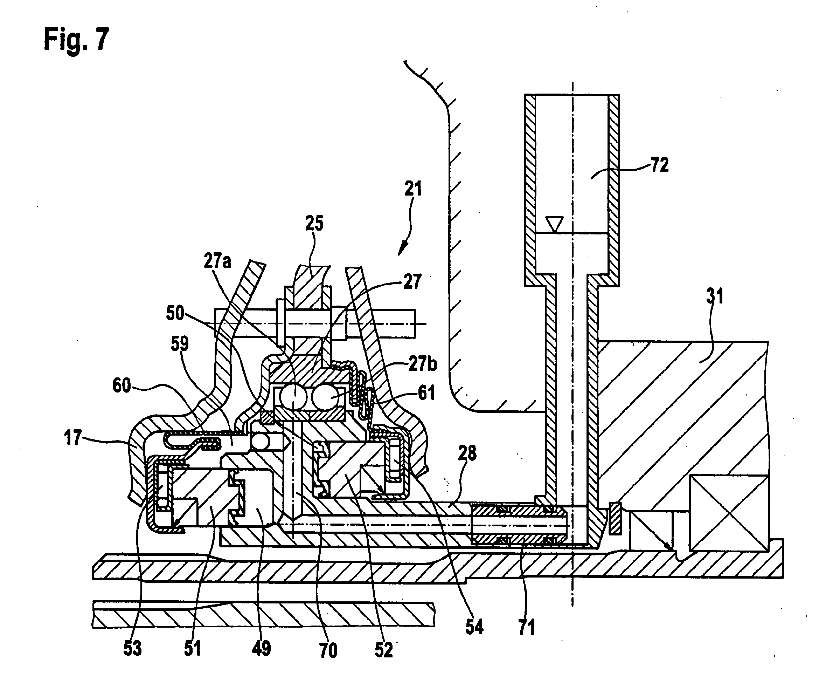

Figur 7 zeigt das Betätigungssystem 21 der Figur 1 in einer geänderten Schnittdarstellung. Hierbei ist die Druckkammer 49 druckbeaufschlagt und verlagert den Ringkolben 51 axial, der über das Betätigungslager 53 das Übertragungselement 17 beaufschlagt. Der Ringkolben 52 übt bei nicht beaufschlagter Druckkammer 50 keinen Druck auf das Betätigungslager 54 aus. Durch die einseitige Ausübung von Druck auf das Übertragungselement 17 stützt sich das Aktorgehäuse 28 über das Stützlager 27 am Kupplungsgehäuse 25, wodurch die Wälzkörper 27a axial belastet werden. Bei einer Betätigung des Ringkolbens 52 stützt sich das Aktorgehäuse 28 in entgegengesetzte Richtung ab, so dass die Wälzkörper 27b der zweiten Reihe axial belastet werden. Bei der Betätigung beider Reibungskupplungen 2, 3 (Figur 1) heben sich die axialen Belastungskräfte des Stützlagers teilweise auf.

Der die Betätigungslager 53, 54 und das Stützlager 27 aufnehmende Ringraum 59 wird in dem gezeigten Ausführungsbeispiel vollständig mit Fluid wie Schmier- und Kühlmittel befüllt. Um einen Volumenausgleich bei sich bei Verlagerung der Ringkolben 51, 52 änderndem Volumen zu schaffen und damit eine Druckbelastung der Membranen 60, 61 zu vermindern, wird eine Zuleitung 70 zum Ringraum 59 im Aktorgehäuse vorgesehen, die mittels eines Rohrabschnitts 71 mit einem Behälter 72, der als Vorrats- und Niveaubehälter ausgebildet ist, verbunden ist. Der Behälter 72 kann drehfest mit dem Getriebegehäuse 31 verbunden sein. Bei einer Betätigung einer oder beider Reibungskupplungen wird das Volumen des Ringraums 59 erweitert und Fluid kann aus dem Behälter 72 über die Zuleitung 70 in den Ringraum 50 schwerkraftbedingt nachfließen. Bei einem Öffnen einer oder beider Reibungskupplungen verlagern sich die Ringkolben 51, 52 in Richtung Druckkammern 49, 50, so dass das Volumen der Ringkammer 59 verringert und Fluid von dieser in den Behälter verdrängt wird.

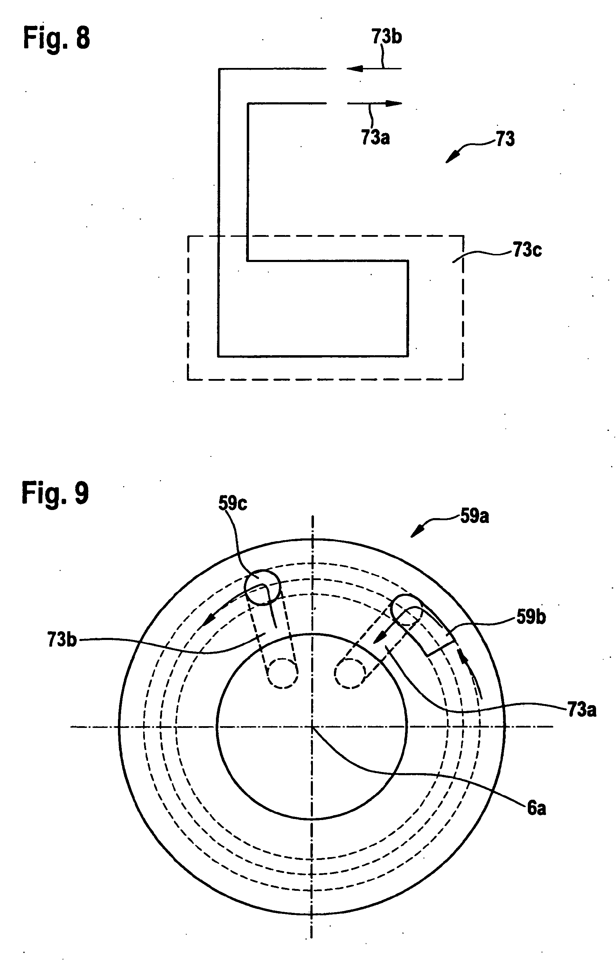

Figur 8 zeigt schematisch einen Kühlkreislauf 73 mit einem Abfluss 73a und einen Zufluss 73b vom beziehungsweise zum nicht dargestellten Ringraum. Die Umwälzung des Fluids erfolgt über eine Kühlzone 73c, die beispielsweise das Getriebegehäuse oder ein separater Kühler sein kann.

Figur 9 zeigt einen schematisch um die Rotationsachse 6a dargestellten Ringraum 59a im Schnitt. In dem Ringraum 59a ist radial außen ein Schöpfrohr 59b vorgesehen, das mit der Ableitung 73a verbunden ist. Durch die Verdrehung der Wandungen des Ringraums 59a, beispielsweise den Membranen 60, 61 und der Außenringe der Betätigungslager 53, 54 und des Stützlagers 27 (Figur 7) wird das Fluid bei drehender Doppelkupplung im Ringraum beschleunigt und kann von dem beispielsweise am stehenden Aktorgehäuse angebrachten Schöpfrohr 59b abgeschöpft und in einem der Figur 8 entsprechenden Kühlkreislauf 73 umgewälzt und über die Zuleitung 73b und die Öffnung 59c wieder dem Ringraum 59a in gekühltem Zustand zugeführt werden.

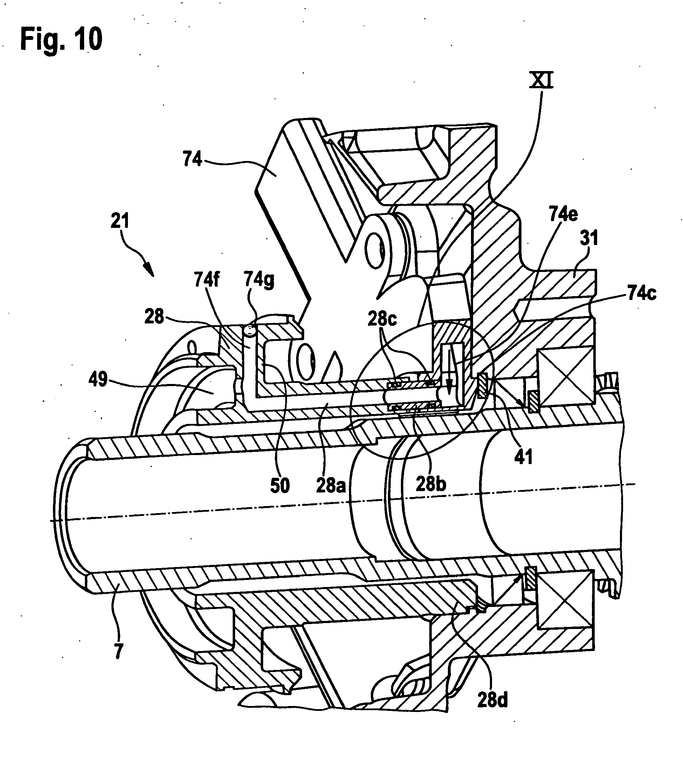

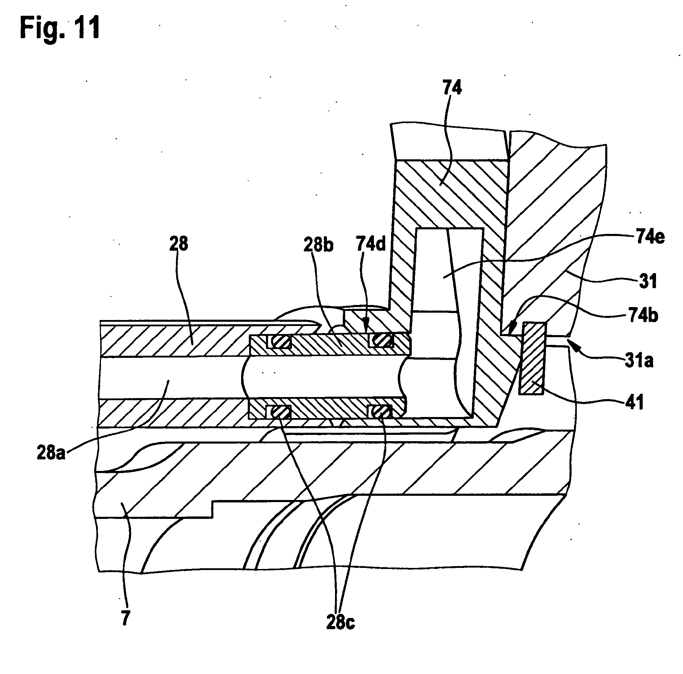

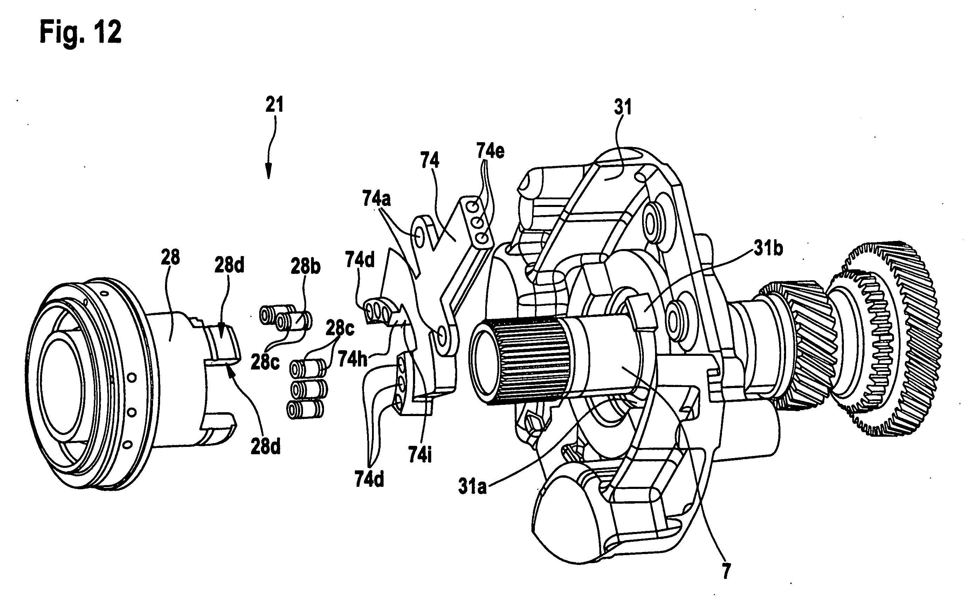

Die Figuren 10 bis 12 zeigen die Versorgung des Betätigungssystems 21 der in Figur 1 dargestellten Doppelkupplung 1 im Schnitt (Figur10), im Detail (Figur 11) und als Explosionsdarstellung (Figur 12). Vom Betätigungssystem 21 ist dabei lediglich das Aktorgehäuse 28 unter Weglassung der Ringkolben dargestellt. Die Zuführung von Druckmittel für jeden Nehmerzylinder und gegebenenfalls für einen Kühlkreislauf des Ringraums erfolgt mittels eines Zuführungsteils 74, das gehäusefest am Getriebegehäuse 31 beispielsweise mittels durch die Öffnungen 74a verschraubter Schrauben angebracht ist. Das Zuführungsteil 74 ist dabei mittels eines Zentrierbunds 74b an der zentralen Getriebeöffnung 31 b zentriert. Das Zuführungsteil 74 weist um den Umfang der Getriebeeingangswelle 7 angeordnete Öffnungen 74d auf, die entsprechenden Zuführleitungen 74e zugeordnet sind, die durch die von äußeren Druckmittelbeziehungsweise Fluidversorgungseinrichtungen wie Geberzylinder, Pumpen beziehungsweise Vorratsbehältern und Zu- und/oder Ableitungen mit Druckmittel für die Druckkammern 49, 50 und Fluid für den Ringraum versorgt werden. Dabei weist das Aktorgehäuse 28 mit den Öffnungen 74d korrespondierende Leitungen 28a auf, die in das Aktorgehäuse eingebohrt sind. Die Figur 10 zeigt im Schnitt eine Versorgungsleitung für den Druckraum 49. Aus Gründen der Darstellbarkeit ist von radial außen eine Stichbohrung 74f gesetzt, die mittels einer Kugel 74g oder dergleichen verschlossen ist. In ähnlicher Weise sind auch die anderen Leitungen im Aktorgehäuse 28 über den Umfang verteilt hergestellt.

Die Leitungen 28a werden mit den Zuführleitungen 74e des Zuführungsteils 74 mittels Rohrabschnitten 28b verbunden, wobei diese an den Leitungen 28a und Zuführleitungen 74e jeweils mittels eines Dichtrings 28c abgedichtet sind. Die Rohrabschnitte 28b können das aufgrund von Lagerreibungen und Schleppverlusten auf das Aktorgehäuse 28 gegenüber dem Getriebegehäuse 31 wirkende Drehmoment abstützen. Weiterhin können die Rohrabschnitte 28b mit Spiel gegenüber deren Aufnahmen vorgesehen sein, so dass ein toleranzbedingter Winkelversatz der Rotationsachsen zwischen Doppelkupplung und Getriebegehäuse 31 ausgeglichen werden kann.

Das Aktorgehäuse 28 weist in Umfangsbereichen, in denen keine Verbindung der Zuführleitungen 74e mit den Leitungen 28a erfolgt, axiale Vorsprünge 28d auf. Mittels dieser Vorsprünge 28d, die in die zentrale Öffnung 31a des Getriebegehäuses 31 eingreifen, oder mittels des Zuführbauteils an dessen Zentriernase 74b erfolgt die Abstützung der Doppelkupplung 1 (Figur 1) an dem Getriebegehäuse 31. Die Doppelkupplung 1 (Figur 1) wird am Anschlag 41 angelegt und beispielsweise mittels des Energiespeichers 134a der Figur 3 gegen diesen verspannt. An dem Zuführungsteil 74 sind zu den Vorsprüngen 28c korrespondierende Ausnehmungen 74h mit in Umfangsrichtung angeordneten, aneinander anliegenden Anlageflächen 74i, 28e die alternativ oder zusätzlich zu den Rohrabschnitten 28b eine Drehmomentstütze für das Aktorgehäuse bilden können. Das Zuführteil 74 kann mittels der in die Ausnehmung 74h eingreifenden Nase 31b am Getriebegehäuse 31 vorzentriert beziehungsweise in Umfangsrichtung abgestützt werden.

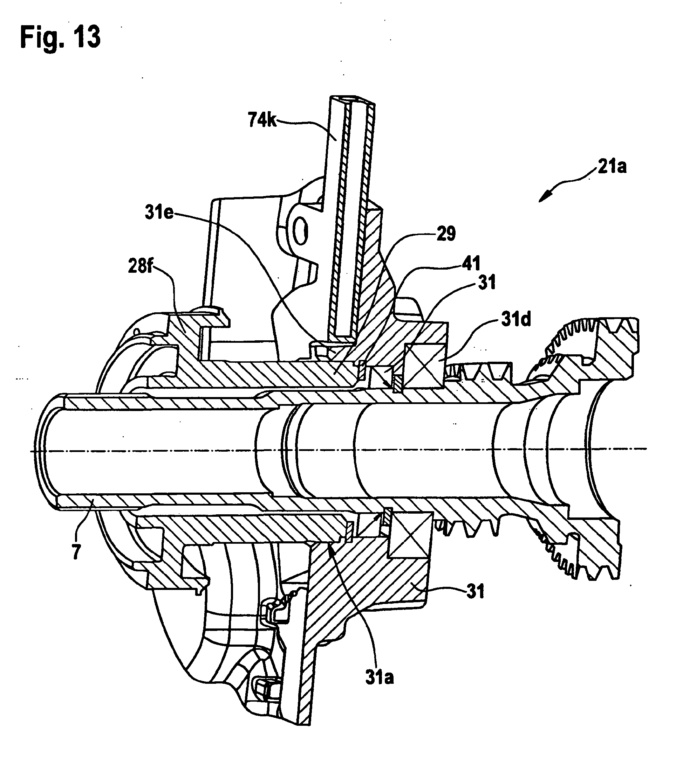

Figur 13 zeigt eine alternative Ausgestaltung des Betätigungssystems 21 der Figuren 10 bis 12 in Form des Betätigungssystem 21 a, bei dem das Aktorgehäuse 28f vollständig mittels des axialen Ansatzes 29 an der zentralen Öffnung 31a des Getriebes 31 radial abgestützt ist und gegen den Anschlag 41 verspannt ist. Axial beabstandet zum Anschlag 41 ist die Getriebeeingangswelle 7 gegenüber der zentralen Öffnung 31a abgedichtet und weiter axial beabstandet mittels des Lagers 31 d gelagert. Das Zuführungsteil 74k ist auf einem Getriebeabsatz 31e aufgenommen. Die nicht dargestellten Verbindungen zwischen Aktorgehäuse 28f und Zuführungsteil 74k können radial angeordnet sein.

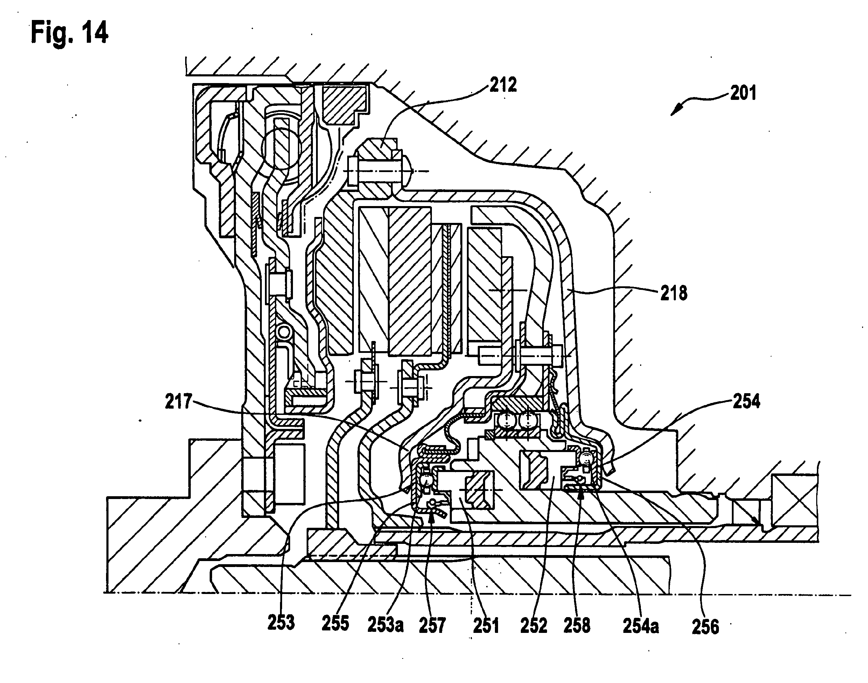

Figur 14 zeigt ein Ausführungsbeispiel einer Doppelkupplung 201 mit Betätigungslagern 253, 254, die aus Kugellagern gebildet sind. Durch die radiale Tragkraft der Kugeln 253a, 254a der Betätigungslager 253, 254 sind die Außenringe 255, 256 sowie die Ringkolben 251, 252 gegenüber den Übertragungselementen 217, 218 radial stabilisiert, so dass der Radialschlag der Radialwellendichtringe 257, 258 minimiert werden kann.

Im Weiteren ist das Übertragungselement 218 einteilig ohne Zuganker ausgestaltet und der Ringkolben 252 überträgt die Betätigungskräfte direkt auf die Druckplatte 212.

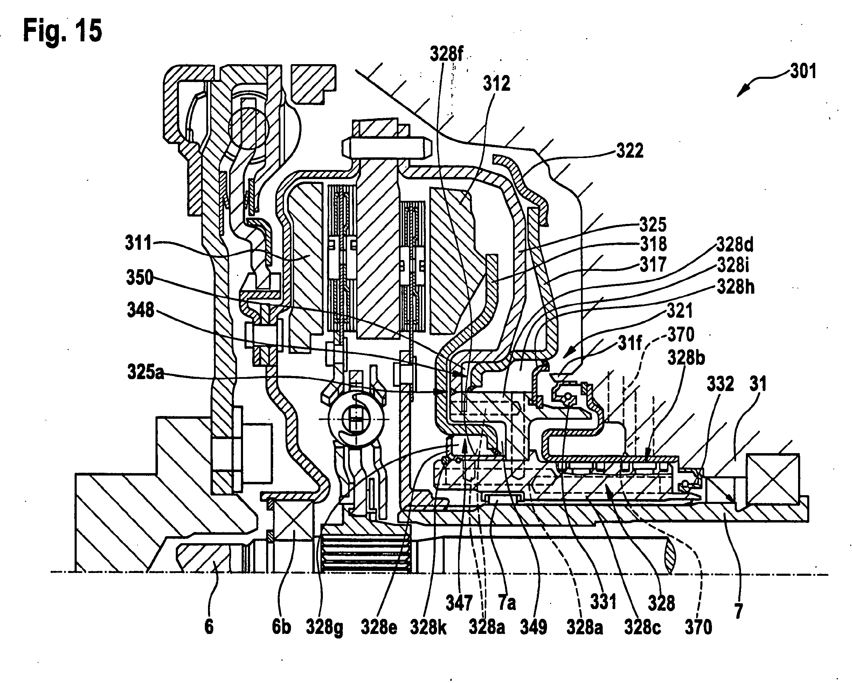

Figur 15 zeigt ein Ausführungsbeispiel einer Doppelkupplung 301, die ein fest mit dem Kupplungsgehäuse 325 verbundenes Betätigungssystem 321 aufweist. Hierzu ist das Aktorgehäuse 328 drehfest mittels einer Verschweißung 325a am Kupplungsgehäuse 325 aufgenommen. Die Versorgung der Druckkammern 349, 350 der Nehmerzylinder 347, 348 erfolgt mittels im Aktorgehäuse 358 vorgesehener gestrichelt dargestellt Leitungen 328a, die mittels Dreheinführungen 328b mit gehäusefesten Zuleitungen 370 des Getriebegehäuses 31 kommunizieren. Zur Abdichtung der Dreheinführungen 328b sind Abdichtungen zwischen dem Getriebegehäuse 31 und dem Aktorgehäuse 328 in Form von Radialwellendichtringen 331, 332 vorgesehen. Die Ringkolben der Nehmerzylinder 347, 348 sind einteilig aus den Übertragungselementen 317, 318 gebildet, Betätigungslager können infolge identischer Rotation von Aktorgehäuse 328 und Kupplungsgehäuse 325 sowie der Übertragungselemente 317, 318 entfallen. Die Übertragungselemente 317, 318 dichten gegenüber den Druckkammern 349, 350 bevorzugt mittels angespritzter oder anvulkanisierter Dichtlippen ab.

Das Aktorgehäuse 328 ist aus fertigungstechnischen Gründen zur Darstellung der Leitungen 328a zweigeteilt. Es besteht aus dem Unterteil 328c, in das die Dreheinführungen 328b eingebracht, beispielsweise eingedreht sind, und einem Oberteil 328d, wobei die beiden Teile gegeneinander abgedichtet sind. Dabei wird das Oberteil 328d in das Unterteil 328c gesteckt und mittels des Fliehölkammerblechteils 328e, das am Oberteil 328d mittels des Sicherungsrings 328k axial fixiert ist, abgedichtet. Das Fliehölkammerblechteil 328e bildet eine Dichtfläche 328f am Innenumfang der Druckkammer 349. Weiterhin bildet das Fliehölkammerdichtblech 328e eine Fliehölkammer 328g, welche mit Druckmittel befüllt und den Fliehkrafteinfluss des in der Druckkammer 349 vorhandenen und die Ausrückkraft erhöhenden Druckmittels kompensiert. Entsprechend weist der Nehmerzylinder 348 ein Fliehölkammerdichtblech 328h auf, das eine mit Druckmittel befüllte Fliehölkammer 328i bildet, die einen entsprechenden durch Fliehkraft des Druckmittels der Druckkammer 350 Anpressdruck an der Druckplatte 311 kompensiert. Dabei wirkt die auf das Übertragungselement 317 übertragene Anpresskraft auf die Druckplatte 311 mittels der Zuganker 322, während die Druckplatte 312 von dem Überragungselement 318 direkt verlagert wird.

In dem gezeigten Ausführungsbeispiel ist die Doppelkupplung 301 mittels eines Festlagers 6b auf der Getriebeeingangswelle 6 und mittels eines Loslagers 7a wie Nadellager auf der Getriebeeingangswelle 7 gelagert. Es versteht sich, dass die Doppelkupplung entsprechend den Ausgestaltungen der Figuren 1 und 3 auf dem Getriebegehäuse gelagert sein kann. Hierzu kann die Doppelkupplung mittels einer entsprechenden Steckverbindung mit der Antriebsseite drehfest und axial begrenzt verlagerbar verbunden sein und am Getriebegehäuse 31, beispielsweise am Ansatz 31f axial fest mittels eines Festlagers aufgenommen sein. Hierbei kann das Festlager 6a entfallen und das Loslager 7a beispielsweise zur Vorzentrierung während der Montage genutzt und nach der Montage ein Lüftspiel zum Aktorgehäuse 328 aufweisen.

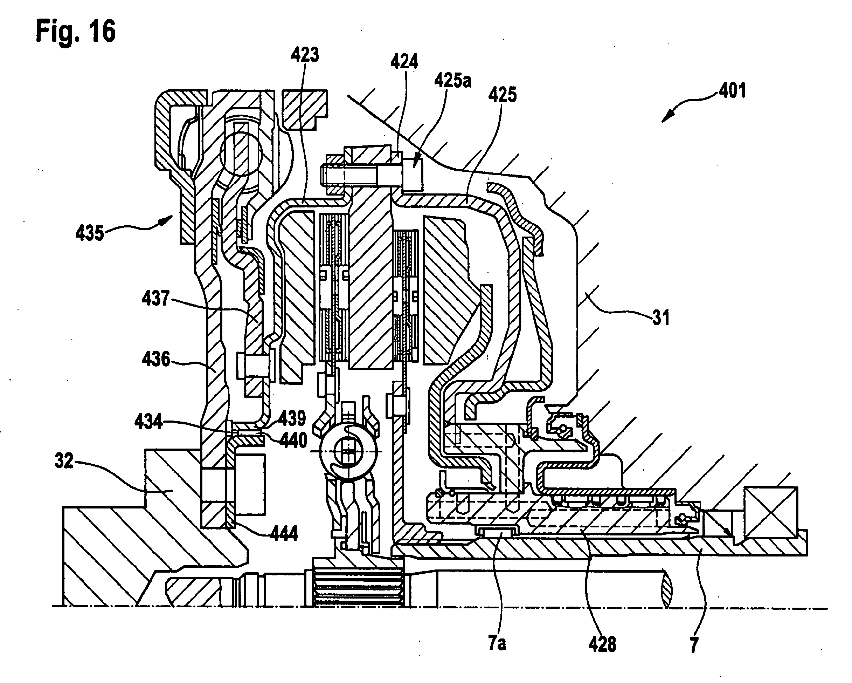

Figur 16 zeigt eine gegenüber der Reibungskupplung 301 der Figur 15 leicht veränderte Doppelkupplung 401, bei dem das Gehäuseteil 423 antriebsseitig am Ausgangsteil 437 des Drehschwingungsdämpfers 435 fest aufgenommen ist. Das Eingangsteil 436 ist fest auf der Antriebswelle 32 gelagert. Auf der Verschraubung der Antriebswelle 32 ist das die Außenverzahnung 440 der Steckverbindung 434 bildende Lagerblech 444 fest angeordnet. Die Innenverzahnung 439 der Steckverbindung 434 ist durch das radial nach innen erweiterte Gehäuseteil 423 gebildet.

Die Montage der Doppelkupplung 401 erfolgt getrennt. Das Gehäuseteil 423 mit dem Drehschwingungsdämpfer 435 wird antriebsseitig montiert. Das Gehäuseteil 424 mit den übrigen Bauteilen der Doppelkupplung 401 wie Kupplungsgehäuse 425 wird getriebeseitig montiert und am Loslager 7a der Getriebeeingangswelle 7 abgestützt. Bei der Verbindung von Antriebseinheit und Getriebe werden Gehäuseteil 423 und Kupplungsgehäuse 425 mittels der Schrauben 425a verschraubt. Auch diese Doppelkupplung 401 kann in vorteilhafter Weise getriebefest gelagert werden. Dabei kann das Loslager 7a als Vorzentrierung bei der Montage eingesetzt werden und nach der Montage ein Lüftspiel zum Aktorgehäuse 428 aufweisen, so dass die Doppelkupplung getriebeseitig ausschließlich mittels des Aktorgehäuses 428 am Getriebegehäuse 31 abgestützt ist. Eine Lagerung hierzu kann auch entsprechend der Doppelkupplung 301 in Figur 15 erfolgen,

### Bezugszeichenliste

- 1: Doppelkupplung
- 2: Reibungskupplung
- 3: Reibungskupplung
- 4: Rotationsachse
- 5: Getriebe
- 6: Getriebeeingangswelle
- 6a: Rotationsachse
- 6b: Festlager
- 7: Getriebeeingangswelle
- 7a: Loslager
- 8: Anpressplatte
- 9: Reibfläche
- 10: Reibfläche
- 11: Druckplatte
- 11a: Erweiterung
- 11b: Blattfeder
- 12: Druckplatte
- 12a: Erweiterung
- 12b: Blattfeder
- 13: Reibbelag
- 14: Reibbelag
- 15: Kupplungsscheibe
- 16: Kupplungsscheibe
- 17: Übertragungselement
- 18: Übertragungselement
- 19: Betätigungseinrichtung
- 20: Betätigungseinrichtung
- 21: Betätigungssystem
- 21a: Betätigungssystem
- 22: Zuganker
- 23: Gehäuseteil
- 24: Gehäuseteil
- 25: Kupplungsgehäuse
- 26: Niet
- 27: Stützlager
- 27a: Wälzkörper
- 27b: Wälzkörper
- 28: Aktorgehäuse
- 28a: Leitung
- 28b: Rohrabschnitt
- 28c: Dichtring
- 28d: Vorsprung
- 28e: Anlagefläche
- 29: axialer Ansatz
- 30: Öffnung
- 30a: Aufnahmefläche
- 31: Getriebegehäuse
- 31a: zentrale Getriebeöffnung
- 31b: Nase
- 31c: Dichtung
- 31d: Lager
- 31e: Getriebeabsatz
- 31f: Ansatz
- 32: Antriebswelle
- 33: Ballus
- 34: Steckverbindung
- 35: Drehschwingungsdämpfer
- 36: Eingangsteil
- 37: Ausgangsteil
- 38: Flanschteil
- 39: Innenverzahnung
- 40: Außenverzahnung
- 41: Anschlag
- 42: Energiespeicher
- 43: Spannblech
- 44: Lagerblech
- 45: Lagerblech
- 46: Lagerung
- 47: Nehmerzylinder
- 48: Nehmerzylinder
- 49: Druckkammer
- 50: Druckkammer
- 51: Ringkolben
- 52: Ringkolben
- 53: Betätigungslager
- 54: Betätigungslager
- 55: Außenring
- 56: Außenring
- 57: Radialwellendichtring
- 58: Radialwellendichtring
- 59: Ringraum
- 59a: Ringraum
- 60: Membran
- 61: Membran
- 62: Dichtung
- 63: Dichtung
- 64: Niet
- 65: Zentrierbolzen
- 66: Sprengring
- 67: Anschlag
- 68: Dichtlippe
- 69: Dichtlippe
- 70: Zuleitung
- 71: Rohrabschnitt
- 72: Behälter
- 73: Kühlkreislauf
- 73a: Ableitung
- 73b: Ableitung
- 73c: Kühlzone
- 74: Zuführungsteil
- 74a: Öffnung
- 74b: Zentrierbund
- 74d: Öffnungen
- 74e: Zuführleitung
- 74f: Stichbohrung
- 74g: Kugel
- 74h: Ausnehmung
- 74i: Anlagefläche
- 74k: Zuführungsteil
- 101: Doppelkupplung
- 111: Druckplatte
- 112: Druckplatte
- 117: Übertragungselement
- 117a: Zentriernase
- 118: Übertragungselement
- 118a: Blattfeder
- 121: Betätigungssystem
- 125: Kupplungsgehäuse
- 123: Gehäuseteil
- 127: Stützlager
- 128: Aktorgehäuse
- 128a: Abstreifring
- 128b: Anschlagscheibe
- 128c: Dichtfläche
- 128d: Öffnung
- 134: Steckverbindung
- 134a: Energiespeicher
- 135: Drehschwingungsdämpfer
- 137: Ausgangsteil
- 139: Innenverzahnung
- 140: Außenverzahnung
- 151: Ringkolben
- 152: Ringkolben
- 153: Betätigungslager
- 154: Betätigungslager
- 157: Radialwellendichtring
- 158: Radialwellendichtring
- 166: Anschlag
- 166a: Materialumformung
- 168: Dichtlippe
- 169: Dichtlippe
- 201: Doppelkupplung
- 212: Druckplatte
- 217: Übertragungselement
- 218: Übertragungselement
- 251: Ringkolben
- 252: Ringkolben
- 253: Betätigungslager
- 253a: Kugel
- 254: Betätigungslager
- 254a: Kugel
- 255: Außenring
- 256: Außenring
- 257: Radialwellendichtring
- 258: Radialwellendichtring
- 301: Doppelkupplung
- 311: Druckplatte
- 312: Druckplatte
- 317: Übertragungselement
- 318: Übertragungselement
- 321: Betätigungssystem
- 322: Zuganker
- 325: Kupplungsgehäuse
- 325a: Verschweißung
- 328: Aktorgehäuse
- 328a: Leitung
- 328b: Dreheinführung
- 328c: Unterteil
- 328d: Oberteil
- 328e: Fliehölkammerblechteil
- 328f: Dichtfläche
- 328g: Fliehölkammer
- 328h: Fliehölkammerblechteil
- 328i: Fliehölkammer
- 328k: Sicherungsring
- 331: Radialwellendichtring
- 332: Radialwellendichtring
- 347: Nehmerzylinder
- 348: Nehmerzylinder
- 349: Druckkammer
- 350: Druckkammer
- 370: Zuleitung
- 401: Doppelkupplung,
- 423: Gehäuseteil
- 424: Gehäuseteil
- 425: Kupplungsgehäuse
- 425a: Schraube
- 428: Aktorgehäuse
- 434: Steckverbindung
- 435: Drehschwingungsdämpfer
- 436: Eingangsteil
- 437: Ausgangsteil
- 439: Innenverzahnung
- 440: Außenverzahnung
- 444: Lagerblech

## Patentansprüche

1. Doppelkupplung (1, 101, 201, 301, 401) mit zwei von einer Antriebseinheit angetriebenen Reibungskupplungen (2, 3) mit einem gemeinsamen Kupplungsgehäuse (25, 125, 325, 425) und einer mit diesem fest verbundenen Anpressplatte (8) mit zwei Reibflächen (9, 10) sowie zwei jeweils einer Reibfläche (9, 10) zugewandten, axial verlagerbaren Druckplatten (11, 12, 311, 312), wobei zwischen jeweils einer Druckplatte (11, 12, 111, 112, 311, 312) und der Anpressplatte (8) Reibbeläge (13, 14) mit jeweils einer Getriebeeingangswelle (6, 7) eines Getriebes (5) drehfest verbundenen Kupplungsscheibe (15, 16) zur Bildung eines Reibeingriffs durch axiale Beaufschlagung der Druckplatten (11, 12, 111, 112, 311, 312) mittels eines Betätigungssystems (21, 321) mit jeweils einer Betätigungseinrichtung (19, 20) verspannbar sind, **dadurch gekennzeichnet, dass** das Betätigungssystem (21, 321) mittels eines gemeinsamen Aktorgehäuses (28, 128, 328, 428) gegenüber dem Kupplungsgehäuse (25, 125, 325, 425) über ein Stützlager (27, 127) radial abgestützt und durch dieses axial fest im Kupplungsgehäuse aufgenommen ist, das Aktorgehäuse (28, 128, 328, 428) beide Betätigungseinrichtungen (19, 20) enthält und die Betätigungseinrichtungen (19, 20) axial in entgegengesetzte Richtung wirksam sind.

2. Doppelkupplung (1, 101, 201) nach Anspruch 1, **dadurch gekennzeichnet, dass** das Betätigungssystem (21) ein für beide Betätigungseinrichtungen (19, 20) gemeinsames, gegenüber dem Kupplungsgehäuse (25, 125) verdrehbar angeordnetes Aktorgehäuse (28, 128) aufweist, das an einem Getriebegehäuse (31) des Getriebes (5) radial abgestützt und verdrehbar abgestützt ist.

3. Doppelkupplung (1, 101, 201) nach einem der Ansprüche 1 oder 2, **dadurch gekennzeichnet, dass** die Betätigungseinrichtungen (19, 20) Übertragungselemente (17, 18, 117, 118, 217, 218, 317, 318) beaufschlagen, die ohne Hebelwirkung die Druckplatten (11, 12) direkt verlagern.

4. Doppelkupplung (1) nach Anspruch 3, **dadurch gekennzeichnet, dass** die Übertragungselemente (17, 18) am Kupplungsgehäuse (25) mittels Zentrierbolzen (65) zentriert sind.

5. Doppelkupplung (1, 101, 201) nach einem der Ansprüche 1 bis 4, **dadurch gekennzeichnet, dass** zumindest eine der beiden Reibungskupplungen (2, 3) eine zwangsweise zugedrückte Reibungskupplung ist.

6. Doppelkupplung (1, 101, 201) nach Anspruch 5, **dadurch gekennzeichnet, dass** zwischen dem Kupplungsgehäuse (25, 125) oder der Anpressplatte (8) und der Druckplatte (11, 12, 111, 112, 311, 312) ein axial wirksamer Energiespeicher angeordnet ist, der die nicht unter Last stehende Betätigungseinrichtung axial in eine Ruheposition bei geöffneter Reibungskupplung (2, 3) verlagert.

7. Doppelkupplung (1, 101, 201) nach Anspruch 6, **dadurch gekennzeichnet, dass** der Energiespeicher aus über den Umfang verteilten, verstärkten Blattfedern (11b, 12b) gebildet ist.

8. Doppelkupplung (1, 101, 201) nach einem der Ansprüche 1 bis 7, **dadurch gekennzeichnet, dass** die beiden Betätigungseinrichtungen (19, 20) aus Nehmerzylindern (47, 48) mit in das Aktorgehäuse (28, 128) eingebrachten Druckkammern (49, 50) aufgenommenen Ringkolben (51, 52, 151, 152, 251, 252) gebildet sind.

9. Doppelkupplung (1, 101, 201) nach einem der Ansprüche 4 bis 8, dadurch gekennzeich-9. Doppelkupplung (1, 101, 201) nach einem der Ansprüche 4 bis 8, **dadurch gekennzeichnet, dass** zwischen den Betätigungseinrichtungen (19, 20) und den Übertragungselementen (17, 18, 117, 118, 217, 218) vorgesehene Betätigungslager(53, 54, 153, 154, 253, 254) aus einem Nadellager oder Kugellager gebildet sind.

10. Doppelkupplung (1, 101, 201) nach einem der Ansprüche 8 oder 9, **dadurch gekennzeichnet, dass** die Ringkolben (51, 52, 151, 152, 251, 252) in der Druckkammer (49, 50) verdrehgesichert untergebracht sind.

11. Doppelkupplung (1, 101, 201) nach Anspruch 9 oder 10, **dadurch gekennzeichnet, dass** die Betätigungslager (53, 54, 153, 154, 253, 254) und ein das Aktorgehäuse (28, 258) am Kupplungsgehäuse (25, 125) aufnehmendes Stützlager (27, 127) in einem Ringraum (59) untergebracht sind.

12. Doppelkupplung (101) nach einem der Ansprüche 8 bis 11, **dadurch gekennzeichnet, dass** die Ringkolben (151, 152) auf demselben Durchmesser angeordnet sind.

13. Doppelkupplung (1, 101, 201) nach einem der Ansprüche 8 bis 12, **dadurch gekennzeichnet, dass** eine Übergabe von Druckmittel zur Betätigung der Nehmerzylinder (51, 52, 151, 152, 251, 252) von radial außen mittels eines Zuführungsteils (74) erfolgt.

14. Doppelkupplung (1, 101, 201) nach Anspruch 13, **dadurch gekennzeichnet, dass** das Zuführungsteil (74) am Getriebegehäuse (31) befestigt ist.

15. Doppelkupplung (1, 101, 201) nach Anspruch 13 oder 14, **dadurch gekennzeichnet, dass** das Zuführungsteil (74) axial ausgerichtete Öffnungen (74d) aufweist, die mit korrespondierenden Druckanschlüssen des Aktorgehäuses (28, 128) verbindbar sind.

16. Doppelkupplung (1, 101, 201) nach Anspruch 15, **dadurch gekennzeichnet, dass** die Verbindung der Öffnungen (74d) mittels zu den Druckanschlüssen abgedichteten Rohrabschnitten (71) erfolgt.

17. Doppelkupplung (1, 101, 201) nach Anspruch 15 oder 16, **dadurch gekennzeichnet, dass** die Öffnungen (74d) auf demselben Durchmesser wie ein axialer Vorsprung (28d) des Aktorgehäuses (28, 128) zur Abstützung der Doppelkupplung (1, 101, 201) am Getriebegehäuse (31) angeordnet ist.

18. Doppelkupplung (1, 101, 201) nach Anspruch 15 oder 16, **dadurch gekennzeichnet, dass** die Rohrabschnitte (28b) ein Aufnahmespiel in den Öffnungen (74d) und/oder Druckanschlüssen des Aktorgehäuses (28, 128) aufweisen.

19. Doppelkupplung (1, 101, 201) nach einem der Ansprüche 15 bis 18, **dadurch gekennzeichnet, dass** eine Drehmomentabstützung des Aktorgehäuses (28, 128) gegenüber dem Getriebegehäuse (31) mittels der Rohrabschnitte (28b) erfolgt.

20. Doppelkupplung (1, 101, 201) nach einem der Ansprüche 17 bis 19, **dadurch gekennzeichnet, dass** zumindest ein axialer Vorsprung (28d) des Aktorgehäuses (28, 128) zur Abstützung am Getriebegehäuse (31) einen Vorsprung mit den Öffnungen (74d) des Zuführungsteils (74) axial übergreift.

21. Doppelkupplung (1, 101, 201) nach Anspruch 20, **dadurch gekennzeichnet, dass** sich die Vorsprünge in Umfangsrichtung zur Abstützung des Drehmoments zwischen Aktorgehäuse (28, 128) und Getriebegehäuse (31) abstützen.

22. Doppelkupplung (1, 101, 201) nach einem der Ansprüche 8 bis 21, **dadurch gekennzeichnet, dass** die Ringkolben (51, 52, 151, 152, 251, 252) in der Drückkammer (49, 50) mit Spiel aufgenommen sind.

23. Doppelkupplung (1, 101, 201) nach Anspruch 22, **dadurch gekennzeichnet, dass** zumindest ein Ringkolben (151) einen zu einer Dichtlippe (169) axial beabstandeten Abstreifring (128a) aufweist.

24. Doppelkupplung (1, 101, 201) nach Anspruch 23, **dadurch gekennzeichnet, dass** zwischen Dichtlippe (169) und Abstreifring (128a) eine Öffnung (128d) vorgesehen ist.

25. Doppelkupplung (1, 101, 201) nach Anspruch 24, **dadurch gekennzeichnet, dass** die Öffnung (128d) mit einem Getriebesumpf des Getriebes (5) verbunden ist.

26. Doppelkupplung (1, 101, 201) nach einem der Ansprüche 1 bis 25, **dadurch gekennzeichnet, dass** die zwischen Antriebseinheit und Anpressplatte (8) angeordnete Druckplatte (11) mittels eines außerhalb des Kupplungsgehäuses (25) die Anpressplatte übergreifenden Übertragungselements (218) betätigt wird.

27. Doppelkupplung (1, 101, 201) nach Anspruch 11 bis 26, **dadurch gekennzeichnet, dass** ein im Ringraum (59) zur Schmierung und Kühlung eingesetztes Fluid in einem äußeren Kühlkreislauf (73) umgewälzt wird.

28. Doppelkupplung (1, 101, 201) nach Anspruch 27, **dadurch gekennzeichnet, dass** das Kühlmittel im Ringraum (59) radial außen abgeschöpft, über das Aktorgehäuse (28, 128) einer äußeren Kühlzone (73c) zugeführt und nach einer Aufnahme durch das Aktorgehäuse (28, 128) wieder dem Ringraum (59) zugeführt wird.

29. Doppelkupplung (1, 101, 201) nach Anspruch 27 oder 28, **dadurch gekennzeichnet, dass** der Kühlkreislauf (73) durch das Getriebegehäuse (31) geführt ist.

30. Doppelkupplung (301, 401) nach Anspruch 1, **dadurch gekennzeichnet, dass** das Aktorgehäuse (328, 428) drehfest mit dem Kupplungsgehäuse (325, 425) verbunden ist und die Betätigungseinrichtungen als in einem Aktorgehäuse (328, 428) angeordnete Nehmerzylinder (351, 352) ausgestaltet sind, wobei ein zur Betätigung von in Druckkammern (349, 350) des Aktorgehäuses (328, 428) aufgenommenen Ringkolben eingesetztes Druckmittel mittels Dreheinführungen (328b) von einem Getriebegehäuse (31) des Getriebes in das Aktorgehäuse (328, 428) eingebracht wird.

31. Doppelkupplung (301, 401) nach Anspruch 30, **dadurch gekennzeichnet, dass** das Aktorgehäuse (328, 428) zweigeteilt ist.

32. Doppelkupplung (301, 401) nach einem der Ansprüche 30 oder 31, **dadurch gekennzeichnet, dass** die Nehmerzylinder (351, 352) radial übereinander angeordnet sind.

33. Doppelkupplung (301, 401) nach einem der Ansprüche 30 bis 32, **dadurch gekennzeichnet, dass** zu zumindest einer Druckkammer (349, 350) eine mit Druckmittel befüllte, parallel angeordnete Fliehölkammer (328g, 328i) zugeordnet ist.

34. Doppelkupplung (301, 401) nach einem der Ansprüche 30 bis 31, **dadurch gekennzeichnet, dass** Ringkolben und die Druckplatten (311, 312) direkt beaufschlagende Übertragungselemente (317, 318) einteilig ausgebildet sind.

35. Doppelkupplung (301, 401) nach Anspruch 34, **dadurch gekennzeichnet, dass** die Übertragungselemente (317, 318) im Bereich der Ringkolben angespritzte Dichtungen zur Abdichtung gegenüber den Druckkammern (349, 350) aufweisen.

36. Doppelkupplung (301, 401) nach einem der Ansprüche 30 bis 35, **dadurch gekennzeichnet, dass** die Doppelkupplung (301, 401) mittels eines Festlagers (6a) auf einer der Getriebeeingangswellen (6, 7) des Getriebes (5) und mittels eines Loslagers (7a) auf der anderen, als Hohlwelle ausgebildeten Getriebeeingangswelle (7) gelagert ist.

37. Doppelkupplung (401) nach einem der Ansprüche 1 bis 36, **dadurch gekennzeichnet, dass** das Kupplungsgehäuse (425) aus einem antriebsseitigen und einem getriebeseitigen Gehäuseteil (423, 424) gebildet ist, wobei beide Gehäuseteile (423, 424) mit der Anpressplatte fest verbunden sind, das antriebsseitige, axial fest an der Antriebsseite und das getriebeseitige, die Antriebsplatte und die Druckplatten enthaltende Gehäuseteil (424) getriebeseitig vormontiert werden und die Gehäuseteile (423, 424) bei der Montage von Antriebseinheit und Getriebe miteinander verbunden werden.

## Claims

1. Dual clutch (1, 101, 201, 301, 401) having two friction clutches (2, 3), which are driven by a drive unit, with a common clutch housing (25, 125, 325, 425) and a pressing plate (8) which is connected fixedly to the latter with two friction faces (9, 10) and two axially displaceable pressure plates (11, 12, 311, 312) which in each case face a friction face (9, 10), it being possible for friction linings (13, 14) of a clutch plate (15, 16), which is connected fixedly to in each case one transmission input shaft (6, 7) of a transmission (5) so as to rotate with said transmission input shaft, to be clamped between in each case one pressure plate (11, 12, 111, 112, 311, 312) and the pressing plate (8) in order to form a frictional engagement by axial loading of the pressure plates (11, 12, 111, 112, 311, 312) by means of an actuating system (21, 321) with in each case one actuating device (19, 20), **characterized in that** the actuating system (21, 321) is supported radially by means of a common actuator housing (28, 128, 328, 428) with respect to the clutch housing (25, 125, 325, 425) via a supporting bearing (27, 127) and is received by way of the latter axially fixedly in the clutch housing, the actuator housing (28, 128, 328, 428) contains both actuating devices (19, 20) and the actuating devices (19, 20) are active axially in opposite directions.

2. Dual clutch (1, 101, 201) according to Claim 1, **characterized in that** the actuating system (21) has an actuator housing (28, 128) which is common to both actuating devices (19, 20), is arranged such that it can be rotated with respect to the clutch housing (25, 125), is supported radially on a transmission housing (31) of the transmission (5) and is supported such that it can be rotated.

3. Dual clutch (1, 101, 201) according to either of Claims 1 and 2, **characterized in that** the actuating devices (19, 20) load transmission elements (17, 18, 117, 118, 217, 218, 317, 318) which displace the pressure plates (11, 12) directly without a lever effect.

4. Dual clutch (1) according to Claim 3, **characterized in that** the transmission elements (17, 18) are centred on the clutch housing (25) by means of centring pins (65).

5. Dual clutch (1, 101, 201) according to one of Claims 1 to 4, **characterized in that** at least one of the two friction clutches (2, 3) is a positively closed friction clutch.

6. Dual clutch (1, 101, 201) according to Claim 5, **characterized in that** an axially active energy store is arranged between the clutch housing (25, 125) or the pressing plate (8) and the pressure plate (11, 12, 111, 112, 311, 312), which axially active energy store displaces the non-loaded actuating device axially into a rest position when the friction clutch (2, 3) is open.

7. Dual clutch (1, 101, 201) according to Claim 6, **characterized in that** the energy store is formed from reinforced flat springs (11b, 12b) which are distributed over the circumference.

8. Dual clutch (1, 101, 201) according to one of Claims 1 to 7, **characterized in that** the two actuating devices (19, 20) are formed from slave cylinders (47, 48) with annular pistons (51, 52, 151, 152, 251, 252) which are received in pressure chambers (49, 50) which are made in the actuator housing (28, 128).

9. Dual clutch (1, 101, 201) according to one of Claims 4 to 8, **characterized in that** actuating bearings (53, 54, 153, 154, 253, 254) which are provided between the actuating devices (19, 20) and the transmission elements (17, 18, 117, 118, 217, 218) are formed from a needle bearing or ball bearing.

10. Dual clutch (1, 101, 201) according to either of Claims 8 and 9, **characterized in that** the annular pistons (51, 52, 151, 152, 251, 252) are received in the pressure chamber (49, 50) such that they cannot rotate.

11. Dual clutch (1, 101, 201) according to Claim 9 or 10, **characterized in that** the actuating bearings (53, 54, 153, 154, 253, 254) and a supporting bearing (27, 127) which receives the actuator housing (28, 258) on the clutch housing (25, 125) are accommodated in an annular space (59).

12. Dual clutch (101) according to one of Claims 8 to 11, **characterized in that** the annular pistons (151, 152) are arranged on the same diameter.

13. Dual clutch (1, 101, 201) according to one of Claims 8 to 12, **characterized in that** a transfer of pressure medium for actuating the slave cylinders (51, 52, 151, 152, 251, 252) takes place from radially on the outside by means of a feed part (74).

14. Dual clutch (1, 101, 201) according to Claim 13, **characterized in that** the feed part (74) is fastened to the transmission housing (31).

15. Dual clutch (1, 101, 201) according to Claim 13 or 14, **characterized in that** the feed part (74) has axially oriented openings (74d) which can be connected to corresponding pressure connections of the actuator housing (28, 128).

16. Dual clutch (1, 101, 201) according to Claim 15, **characterized in that** the connection of the openings (74d) takes place by means of pipe sections (71) which are sealed with respect to the pressure connections.

17. Dual clutch (1, 101, 201) according to Claim 15 or 16, **characterized in that** the openings (74d) are arranged on the same diameter as an axial projection (28d) of the actuator housing (28, 128) for supporting the dual clutch (1, 101, 201) on the transmission housing (31).

18. Dual clutch (1, 101, 201) according to Claim 15 or 16, **characterized in that** the pipe sections (28b) have a receiving play in the openings (74d) and/or pressure connections of the actuator housing (28, 128).

19. Dual clutch (1, 101, 201) according to one of Claims 15 to 18, **characterized in that** a torque support of the actuator housing (28, 128) with respect to the transmission housing (31) takes place by means of the pipe sections (28b).

20. Dual clutch (1, 101, 201) according to one of Claims 17 to 19, **characterized in that** at least one axial projection (28d) of the actuator housing (28, 128) engages axially over a projection with the openings (74d) of the feed part (74) for supporting on the transmission housing (31).

21. Dual clutch (1, 101, 201) according to Claim 20, **characterized in that** the projections are supported in the circumferential direction in order to support the torque between the actuator housing (28, 128) and transmission housing (31).

22. Dual clutch (1, 101, 201) according to one of Claims 8 to 21, **characterized in that** the annular pistons (51, 52, 151, 152, 251, 252) are received with play in the pressure chamber (49, 50).

23. Dual clutch (1, 101, 201) according to Claim 22, **characterized in that** at least one annular piston (151) has a wiper ring (128a) which is spaced apart axially from a sealing lip (169).

24. Dual clutch (1, 101, 201) according to Claim 23, **characterized in that** an opening (128d) is provided between the sealing lip (169) and wiper ring (128a).

25. Dual clutch (1, 101, 201) according to Claim 24, **characterized in that** the opening (128d) is connected to a transmission sump of the transmission (5).

26. Dual clutch (1, 101, 201) according to one of Claims 1 to 25, **characterized in that** the pressure plate (11) which is arranged between the drive unit and pressing plate (8) is actuated by means of a transmission element (218) which engages over the pressing plate outside the clutch housing (25).

27. Dual clutch (1, 101, 201) according to Claims 11 to 26, **characterized in that** a fluid which is used in the annular space (59) for lubrication and cooling is circulated in an external cooling circuit (73).

28. Dual clutch (1, 101, 201) according to Claim 27, **characterized in that** the coolant in the annular space (59) is siphoned off radially to the outside, is fed via the actuator housing (28, 128) to an external cooling zone (73c) and, after being received by the actuator housing (28, 128), is fed to the annular space (59) again.

29. Dual clutch (1, 101, 201) according to Claim 27 or 28, **characterized in that** the cooling circuit (73) is routed through the transmission housing (31).

30. Dual clutch (301, 401) according to Claim 1, **characterized in that** the actuator housing (328, 428) is connected fixedly to the clutch housing (325, 425) so as to rotate with it, and the actuating devices are configured as slave cylinders (351, 352) which are arranged in an actuator housing (328, 428), a pressure medium which is used to actuate annular pistons which are received in pressure chambers (349, 350) of the actuator housing (328, 428) being introduced into the actuator housing (328, 428) from a transmission housing (31) of the transmission by means of rotary inlets (328b).

31. Dual clutch (301, 401) according to Claim 30, **characterized in that** the actuator housing (328, 428) is split in two.

32. Dual clutch (301, 401) according to either of Claims 30 and 31, **characterized in that** the slave cylinders (351, 352) are arranged radially above one another.

33. Dual clutch (301, 401) according to one of Claims 30 to 32, **characterized in that** a centrifugal oil chamber (328g, 328i) which is arranged in parallel and is filled with pressure medium is assigned to at least one pressure chamber (349, 350).

34. Dual clutch (301, 401) according to either of Claims 30 and 31, **characterized in that** annular pistons and transmission elements (317, 318) which load the pressure plates (311, 312) directly are configured in one piece.

35. Dual clutch (301, 401) according to Claim 34, **characterized in that** the transmission elements (317, 318) have seals which are moulded on in the region of the annular pistons for sealing purposes with respect to the pressure chambers (349, 350).

36. Dual clutch (301, 401) according to one of Claims 30 to 35, **characterized in that** the dual clutch (301, 401) is mounted by means of a locating bearing (6a) on one of the transmission input shafts (6, 7) of the transmission (5) and by means of a floating bearing (7a) on the other transmission input shaft (7) which is configured as a hollow shaft.

37. Dual clutch (401) according to one of Claims 1 to 36, **characterized in that** the clutch housing (425) is formed from a drive-side and a transmission-side housing part (423, 424), both housing parts (423, 424) being connected fixedly to the pressing plate, the drive-side housing part being premounted axially fixedly on the drive side and the transmission-side housing part (424) which contains the drive plate and the pressure plates being premounted on the transmission side, and the housing parts (423, 424) being connected to one another during the mounting of the drive unit and transmission.

## Revendications

1. Embrayage double (1, 101, 201, 301, 401), comprenant deux embrayages à friction (2, 3) entraînés par une unité d'entraînement, avec un boîtier d'embrayage commun (25, 125, 325, 425) et un plateau d'application (8) connecté fixement à celui-ci avec deux surfaces de friction (9, 10) ainsi que deux plateaux de pression (11, 12, 311, 312) déplaçables axialement, tournés à chaque fois vers une surface de friction (9, 10), entre un plateau de pression respectif (11, 12, 111, 112, 311, 312) et le plateau d'application (8), des garnitures de friction (13, 14) d'un disque d'embrayage (15, 16) connecté de manière solidaire en rotation à chaque fois à un arbre d'entrée de boîte de vitesses (6, 7) d'une boîte de vitesses (5), en vue de former un engagement par friction par sollicitation axiale des plateaux de pression (11, 12, 111, 112, 311, 312) au moyen d'un système d'actionnement (21, 321), pouvant être serrées avec à chaque fois un dispositif d'actionnement (19, 20), **caractérisé en ce que** le système d'actionnement (21, 321) est supporté radialement au moyen d'un boîtier d'actionneur commun (28, 128, 328, 428) par rapport au boîtier d'embrayage (25, 125, 325, 425) par le biais d'un palier de support (27, 127) et est reçu par celui-ci axialement et fixement dans le boîtier d'embrayage, le boîtier d'actionneur (28, 128, 328, 428) contient les deux dispositifs d'actionnement (19, 20) et les dispositifs d'actionnement (19, 20) sont actifs axialement dans la direction opposée.

2. Embrayage double (1, 101, 201) selon la revendication 1, **caractérisé en ce que** le système d'actionnement (21) présente un boîtier d'actionneur (28, 128) commun aux deux dispositifs d'actionnement (19, 20), disposé de manière rotative par rapport au boîtier d'embrayage (25, 125), lequel boîtier d'actionneur est supporté radialement et est supporté de manière rotative sur un boîtier de boîte de vitesses (31) de la boîte de vitesses (5).

3. Embrayage double (1, 101, 201) selon l'une quelconque des revendications 1 ou 2, **caractérisé en ce que** les dispositifs d'actionnement (19, 20) sollicitent des éléments de transfert (17, 18, 117, 118, 217, 218, 317, 318) qui déplacent directement les plateaux de pression (11, 12) sans effet de levier.

4. Embrayage double (1) selon la revendication 3, **caractérisé en ce que** les éléments de transfert (17, 18) sont centrés au moyen de boulons de centrage (65) sur le boîtier d'embrayage (25).

5. Embrayage double (1, 101, 201) selon l'une quelconque des revendications 1 à 4, **caractérisé en ce qu'**au moins l'un des deux embrayages à friction (2, 3) est un embrayage à friction pressé par force.

6. Embrayage double (1, 101, 201) selon la revendication 5, **caractérisé en ce qu'**entre le boîtier d'embrayage (25, 125) ou le plateau d'application (8) et le plateau de pression (11, 12, 111, 112, 311, 312) est disposé un accumulateur d'énergie agissant axialement, qui déplace le dispositif d'actionnement non soumis à une charge axialement dans une direction de repos lorsque l'embrayage à friction (2, 3) est ouvert.

7. Embrayage double (1, 101, 201) selon la revendication 6, **caractérisé en ce que** l'accumulateur d'énergie est formé de ressorts à lame (11b, 12b) renforcés, répartis sur la périphérie.

8. Embrayage double (1, 101, 201) selon l'une quelconque des revendications 1 à 7, **caractérisé en ce que** les deux dispositifs d'actionnement (19, 20) sont formés de cylindres récepteurs (47, 48) avec pistons annulaires (51, 52, 151, 152, 251, 252) reçus dans des chambres de pression (49, 50) réalisées dans le boîtier d'actionneur (28, 128).

9. Embrayage double (1, 101, 201) selon l'une quelconque des revendications 4 à 8, **caractérisé en ce que** des paliers d'actionnement (53, 54, 153, 154, 253, 254) prévus entre les dispositifs d'actionnement (19, 20) et les éléments de transfert (17, 18, 117, 118, 217, 218) sont formés d'un palier à aiguilles ou d'un roulement à billes.

10. Embrayage double (1, 101, 201) selon l'une quelconque des revendications 8 ou 9, **caractérisé en ce que** les pistons annulaires (51, 52, 151, 152, 251, 252) sont montés de manière fixée en rotation dans la chambre de pression (49, 50).

11. Embrayage double (1, 101, 201) selon la revendication 9 ou 10, **caractérisé en ce que** les paliers d'actionnement (53, 54, 153, 154, 253, 254) et un palier de support (27, 127) recevant le boîtier d'actionneur (28, 258) sur le boîtier d'embrayage (25, 125) sont montés dans un espace annulaire (59).

12. Embrayage double (101) selon l'une quelconque des revendications 8 à 11, **caractérisé en ce que** les pistons annulaires (151, 152) sont disposés sur le même diamètre.

13. Embrayage double (1, 101, 201) selon l'une quelconque des revendications 8 à 12, **caractérisé en ce qu'**un transfert de fluide sous pression pour l'actionnement des cylindres récepteurs (51, 52, 151, 152, 251, 252) a lieu radialement depuis l'extérieur au moyen d'une pièce d'alimentation (74).

14. Embrayage double (1, 101, 201) selon la revendication 13, **caractérisé en ce que** la pièce d'alimentation (74) est fixée au boîtier de boîte de vitesses (31).

15. Embrayage double (1, 101, 201) selon la revendication 13 ou 14, **caractérisé en ce que** la pièce d'alimentation (74) présente des ouvertures (74d) orientées axialement, qui peuvent être connectées à des raccords de pression correspondants du boîtier d'actionneur (28, 128).

16. Embrayage double (1, 101, 201) selon la revendication 15, **caractérisé en ce que** la connexion des ouvertures (74d) a lieu au moyen de sections tubulaires (71) étanchées par rapport aux raccords de pression.

17. Embrayage double (1, 101, 201) selon la revendication 15 ou 16, **caractérisé en ce que** les ouvertures (74d) sont disposées sur le même diamètre qu'une saillie axiale (28d) du boîtier d'actionneur (28, 128) pour le support de l'embrayage double (1, 101, 201) sur le boîtier de boîte de vitesses (31).

18. Embrayage double (1, 101, 201) selon la revendication 15 ou 16, **caractérisé en ce que** les sections tubulaires (28b) présentent un jeu de réception dans les ouvertures (74d) et/ou dans les raccords de pression du boîtier d'actionneur (28, 128).

19. Embrayage double (1, 101, 201) selon l'une quelconque des revendications 15 à 18, **caractérisé en ce qu'**un support de couple du boîtier d'actionneur (28, 128) par rapport au boîtier de boîte de vitesses (31) a lieu au moyen des sections tubulaires (28b).

20. Embrayage double (1, 101, 201) selon l'une quelconque des revendications 17 à 19, **caractérisé en ce qu'**au moins une saillie axiale (28d) du boîtier d'actionneur (28, 128) vient en prise axialement par le dessus pour le support sur le boîtier de boîte de vitesses (31) avec une saillie de la pièce d'alimentation (74) présentant les ouvertures (74d).

21. Embrayage double (1, 101, 201) selon la revendication 20, **caractérisé en ce que** les saillies s'appuient dans la direction périphérique pour supporter le couple entre le boîtier d'actionneur (28, 128) et le boîtier de boîte de vitesses (31).

22. Embrayage double (1, 101, 201) selon l'une quelconque des revendications 8 à 21, **caractérisé en ce que** les pistons annulaires (51, 52, 151, 152, 251, 252) sont reçus avec jeu dans la chambre de pression (49, 50).

23. Embrayage double (1, 101, 201) selon la revendication 22, **caractérisé en ce qu'**au moins un piston annulaire (151) présente une bague de raclage (128a) espacée axialement d'une lèvre d'étanchéité (169).

24. Embrayage double (1, 101, 201) selon la revendication 23, **caractérisé en ce qu'**entre la lèvre d'étanchéité (169) et la bague de raclage (128a) est prévue une ouverture (128d).

25. Embrayage double (1, 101, 201) selon la revendication 24, **caractérisé en ce que** l'ouverture (128d) est connectée par un carter de la boîte de vitesses (5).

26. Embrayage double (1, 101, 201) selon l'une quelconque des revendications 1 à 25, **caractérisé en ce que** le plateau de pression (11) disposé entre l'unité d'entraînement et le plateau d'application (8) est actionné au moyen d'un élément de transfert (218) venant en prise par le dessus avec le plateau d'application à l'extérieur du boîtier d'embrayage (25).

27. Embrayage double (1, 101, 201) selon l'une quelconque des revendications 11 à 26, **caractérisé en ce qu'**un fluide introduit dans l'espace annulaire (59) pour la lubrification et le refroidissement circule dans un circuit de refroidissement extérieur (73).

28. Embrayage double (1, 101, 201) selon la revendication 27, **caractérisé en ce que** le fluide de refroidissement dans l'espace annulaire (59) est évacué radialement vers l'extérieur, acheminé par le biais du boîtier d'actionneur (28, 128) à une zone de refroidissement extérieure (73c), et est ramené à l'espace annulaire (59) après avoir été reçu par le boîtier d'actionneur (28, 128).

29. Embrayage double (1, 101, 201) selon la revendication 27 ou 28, **caractérisé en ce que** le circuit de refroidissement (73) est guidé à travers le boîtier de boîte de vitesses (31).

30. Embrayage double (301, 401) selon la revendication 1, **caractérisé en ce que** le boîtier d'actionneur (328, 428) est connecté de manière solidaire en rotation au boîtier d'embrayage (325, 425) et les dispositifs d'actionnement sont configurés sous forme de cylindres récepteurs (351, 352) disposés dans un boîtier d'actionneur (328, 428), un fluide sous pression introduit pour l'actionnement de pistons annulaires reçus dans des chambres de pression (349, 350) du boîtier d'actionneur (328, 428) étant introduit au moyen d'entrées rotatives (328b) depuis un boîtier de boîte de vitesses (31) de la boîte de vitesses dans le boîtier d'actionneur (328, 428).

31. Embrayage double (301, 401) selon la revendication 30, **caractérisé en ce que** le boîtier d'actionneur (328, 428) est en deux parties.

32. Embrayage double (301, 401) selon l'une quelconque des revendications 30 ou 31, **caractérisé en ce que** les cylindres récepteurs (351, 352) sont disposés radialement l'un au-dessus de l'autre.

33. Embrayage double (301, 401) selon l'une quelconque des revendications 30 à 32, **caractérisé en ce qu'**à au moins une chambre de pression (349, 350) est associée une chambre d'huile centrifuge (328g, 328i) disposée parallèlement et remplie de fluide sous pression.

34. Embrayage double (301, 401) selon l'une quelconque des revendications 30 à 31, **caractérisé en ce que** des éléments de transfert (317, 318) sollicitant directement les pistons annulaires et les plateaux de pression (311, 312) sont réalisés d'une seule pièce.

35. Embrayage double (301, 401) selon la revendication 34, **caractérisé en ce que** les éléments de transfert (317, 318) présentent des joints d'étanchéité pulvérisés dans la région du piston annulaire pour l'étanchéité vis-à-vis des chambres de pression (349, 350).

36. Embrayage double (301, 401) selon l'une quelconque des revendications 30 à 35, **caractérisé en ce que** le double embrayage (301, 401) est monté au moyen d'un palier fixe (6a) sur l'un des arbres d'entrée de boîte de vitesses (6, 7) de la boîte de vitesses (5) et au moyen d'un palier fou (7a) sur l'autre arbre d'entrée de boîte de vitesses (7) réalisé sous forme d'arbre creux.

37. Embrayage double (401) selon l'une quelconque des revendications 1 à 36, **caractérisé en ce que** le boîtier d'embrayage (425) est formé d'une partie de boîtier (423, 424) du côté de l'entraînement et du côté de la boîte de vitesses respectivement, les deux parties de boîtier (423, 424) étant connectées fixement au plateau d'application, la partie de boîtier du côté de l'entraînement, fixée axialement au côté d'entraînement, et la partie de boîtier (424) du côté de la boîte de vitesses, contenant le plateau d'application et les plateaux de pression, étant prémontées du côté de la boîte de vitesses et les parties de boîtier (423, 424) étant connectées l'une à l'autre lors du montage de l'unité d'entraînement et de la boîte de vitesses.
